**Europäisches Patentamt**

**European Patent Office**

**Office européen des brevets**

(19)

(11) **EP 0 730 213 A2**

(12) **EUROPÄISCHE PATENTANMELDUNG**

(43) Veröffentlichungstag:
04.09.1996 Patentblatt 1996/36

(51) Int. Cl.⁶: $G05D\ 23/19$, $F24D\ 19/10$

(21) Anmeldenummer: 96103103.6

(22) Anmeldetag: 01.03.1996

(84) Benannte Vertragsstaaten:
AT CH DE DK FR GB LI NL

(30) Priorität: 02.03.1995 DE 19507247

(71) Anmelder: Baunach, Hans-Georg
52445 Titz (DE)

(72) Erfinder: Baunach, Hans-Georg
52445 Titz (DE)

(74) Vertreter: Aubele, Karl B.
Bavariastrasse 1
80336 München (DE)

(54) **Verfahren und Vorrichtung zur hydraulisch optimierten Regelung der Vorlauftemperatur**

(57) Eine herkömmliche Regelung der Vorlauftemperatur wird mit einem hydraulischen Regler derart verkettet, daß anhand des Vergleichs des momentanen hydraulischen Zustands des Heiz- oder Kühlsystems mit einer hydraulischen Führungsgröße die Führungsgröße der Vorlauftemperaturregelung festlegt wird. Die hydraulische Führungsgröße kann dabei durch Adaption des hydraulischen Reglers an das Rohrleitungsnetz festgelegt und durch ein Zeitglied, eine Teillast/Vollast-Normierung und/oder eine Vorlauf/Rücklauftemperatur-kompensation angepaßt werden.

Dadurch werden die bekannte außentemperaturgesteuerte (witterungsgeführte) und andere lastunabhängige Vorlauftemperaturregelungen durch eine hydraulisch optimierte Vorlauftemperaturregelung ersetzt.

Unter einer optimalen Vorlauftemperatur wird diejenige Vorlauftemperatur verstanden, welche allgemein unter allen bedarfsgenügenden Vorlauftemperaturen die kleinste Abweichung von der Umgebungstemperatur besitzt oder aber in spezieller Weise die Vorlauftemperatur bedarfsabhängig an das Wirkungsgradkennfeld des Wärme/Kälteerzeugers anpaßt. So können unterschiedliche Wärmeerzeuger unterschiedliche Regelstrategien erfordern, um den Nutzungsgrad zu steigern.

Fig. 2

**Beschreibung**

Die Erfindung betrifft ein Verfahren zur Regelung der Vorlauftemperatur eines Heiz- oder Kühlmittelkreislaufs, bei dem die Vorlauftemperatur einer Wärme- oder Kältequelle als erste, innere Regelgröße gemessen wird, mit einer vorgegebenen, variierbaren ersten Führungsgröße verglichen und entsprechend der Regelabweichung die Leistung der Wärme- oder Kältequelle im Sinne einer Minimierung der Regelabweichung angepaßt wird. Außerdem betrifft sie eine Vorrichtung zur Regelung der Vorlauftemperatur mit einer Wärme- oder Kältequelle, einer Pumpe, einem Heiz- oder Kühlmittelkreislauf und einer inneren Regeleinrichtung zum Einstellen der Vorlauftemperatur.

Derartige Verfahren und Vorrichtungen sind in der Technik weit verbreitet. Das bekannteste Einsatzgebiet ist die Regelung von Gebäudeheizungen. Die Erfindung bezieht sich jedoch nicht nur darauf, sondern auf das gesamte Gebiet des heizklima- und kältetechnischen Wärmetransports, in dem man sich geschlossener Stoffkreisläufe flüssiger, vornehmlich wäßriger Medien bedient, um Wärme oder Kälte von den Orten ihrer Entstehung oder Herstellung zu denen des Bedarfs oder Verwendungszwecks zu leiten. An den Stellen der Herstellung oder des Bedarfs befinden sich geeignete Wärmetauscher, die einen möglichst guten Wärme- oder Kälteübergang zwischen dem Medium und der Umgebung bewirken sollen, während die übrigen Oberflächen des Systems möglichst gut isoliert sind, um Verluste zu begrenzen. Der Teil des Stoffkreislaufs, der sich von der zentralen Wärme oder Kältequelle zu den Senken bewegt, heißt Vorlauf und derjenige Teil, der sich von den Wärme- oder Kältesenken zur zentralen Quelle bewegt, heißt Rücklauf. Die Gedanken der Erfindung erstrecken sich auf Zentralheizungs-, Lüftungs- und Klimaanlagen ebenso wie auf Fernwärmenetze oder Anlagen zur zentralen Kälteversorgung. Außerdem ist es unirelevant, ob die Ankopplung der Wärmetauscher passiv durch Ventile oder aktiv durch Pumpen erfolgt.

Die bekannten Regelungsmechanismen sind dazu geeignet, die Vorlauftemperatur an eine vorgegebene Führungsgröße anzunähern und im Bereich dieser Führungsgröße nahegehend konstant zu halten. Das Problem liegt jedoch darin, daß die Vorlauftemperatur an den momentanen Wärme- oder Kältebedarf angepaßt sein sollte und eine konstant eingestellte Vorlauftemperatur diesen Anforderungen an das System nicht gerecht wird.

Die Vorlauftemperatur muß einerseits so hoch eingestellt werden, daß jeder Systemteil seinen Wärmebedarf in akzeptabler Zeit durch Öffnen und Schließen des entsprechenden Ventils beziehungsweise Ein- und Ausschalten der entsprechenden Pumpe decken kann. Andererseits muß die Abweichung der Vorlauftemperatur von der Umgebungstemperatur minimal sein, uni erstens die Bereitstellungs- und Transportverluste zu minimieren, und zweitens bei den meisten Wärme- oder Kältequellen den Wirkungsgrad zu maximieren. Da in der Regel eine Erfassung der lokalen Wärme- oder Kältebedarfe der einzelnen Systemteile aus Kostengründen ausscheidet, stellt sich das Problem der Optimierung zentral.

Dieses Problem ist besonders relevant in der Brennwerttechnik, bei der der Wirkungsgrad unterhalb einer bestimmten Vorlauf- bzw. Rücklauftemperatur stark ansteigt, da nur dann Kondensat gebildet werden kann. Hier muß ganz besonderer Wert auf eine möglichst niedrige Vorlauf- bzw. Rücklauftemperatur gelegt werden.

Auf dem Gebiet der Zentralheizungssysteme ist das übliche Verfahren zur Festlegung der Vorlauftemperatur die außentemperaturgesteuerte (witterungsgeführte) Vorlauftemperaturregelung, bei der die Vorlauftemperatur Regelgröße ist und die zugehörige Führungsgröße eine Funktion der (witterungskorrigierten) Außentemperatur darstellt. Der funktionale Zusammenhang ergibt sich aus der sogenannten Heizkurve, deren Steilheit $[\alpha]$ und Vertikalverschiebung (Fußpunkt) $[\beta]$ bei den üblichen Außentemperatursteuerungen manuell eingestellt werden kann. Dieses System der Außentemperatursteuerung besitzt jedoch einige wesentliche Schwächen:

Zum einen gestaltet sich die Einstellung der erwähnten Heizkurve deshalb schwierig, weil man zur optimalen Wahl der beiden Parameter mindestens einen möglichst warmen und einen möglichst kalten Tag benötigt Mangels Gelegenheit werden die meisten Anlagen daher nur sehr grob eingestellt und dann in der Praxis über die Thermostatventile an den einzelnen Heizkörpern gedrosselt. Dies führt zu ungünstig hohen Vorlauftemperaturen und teilweise auch zu Strömungsgeräuschen an den Ventilen. Zum anderen ist die Wahl des geeigneten Montageortes für den Außentemperatur- (Witterungs-)fühler entscheidend für die Funktion des Systems. Da der Außentemperatur- (Witterungs-)fühler üblicherweise an einer Gebäudeaußenwand angebracht ist, die in der Nähe der Heizungsanlage liegt, ist die dort gemessene Temperatur nicht unbedingt repräsentativ für den jeweils aktuellen Wärmebedarf des Hauses.

Auch Fernwärmesysteme arbeiten im allgemeinen nach dem Prinzip der Außentemperatursteuerung, wobei die individuelle Ankopplung eines Wohnhauses an den Fernwärmekreis meist über eine zweite (witterungskorrigierte) Außentemperatursteuerung erfolgt. Hierbei liegt also eine Verkettung von (witterungskorrigierten) Außentemperatursteuerungen vor, bei der die oben beschriebenen Probleme ebenfalls in verketteter Form auftreten.

Der Erfindung liegt daher die Aufgabe zugrunde, ein Verfahren und eine Vorrichtung zur Optimierung der Vorlauftemperatur bereitzustellen.

Diese Aufgabe wird mit den Merkmalen des Anspruchs 1 bzw. des Anspruchs 8 gelöst

Vorteilhafte Weiterbildungen ergeben sich aus den Unteransprüchen.

Da der momentane, lokale Wärme oder Kältebedarf durch die aktive oder passive hydraulische Ankopplung der entsprechenden Wärmetauscher repräsentiert wird, kann die momentane, globale Wärme- oder Kältelast des Systems anhand des hydraulischen Zustands des Heiz- oder Kühlmittelkreislaufes abgelesen werden. Diese Information wird zur Korrektur der Vorlauftemperatur verwendet, welche somit lastabhängig geregelt wird. Das Ergebnis ist auch als hydraulisch optimierte Vorlauftemperaturregelung zu bezeichnen.

Bei dem Verfahren handelt es sich uni einen geschlossenen äußeren Regelkreis, in den der innere Kreis der Vorlauftemperaturregelung eingebettet ist. Dabei kann die äußere Regelabweichung der hydraulischen Rückkopplung sowohl selbständig als auch gemeinsam mit einer herkömmlichen (witterungskorrigierten) Außentemperatursteuerung auf die Führungsgröße des inneren Regelkreises der Vorlauftemperatur einwirken. Dies schließt auch die üblichen Kombinationen mit einem Raumtemperaturfühler, einer Fernbedienung und/oder einer Fernanzeige ein. Im Falle des Zusammenwirkens mit einer (witterungskorrigierten) Außentemperatursteuerung ist der Einfluß der hydraulischen Rückkopplung auf die Führungsgröße des inneren Regelkreises der Vorlauftemperatur auch als hydraulisch optimierte Vorlauftemperaturkorrektur zu bezeichnen.

Der hydraulische Zustand des Heiz- oder Kühlmittelkreislaufs kann als Fördermenge $\Phi$ und/oder Förderhöhe H des Heiz- oder Kühlmittels ermittelt werden. Diese Parameter sind leicht am System zu messen und können direkt oder zueinander in Beziehung gesetzt in das Regelungssystem einfließen.

Eine elegante Möglichkeit, den hydraulischen Zustand des Systems zu bestimmen, ist es, spezielle Parameter an der Heiz- oder Kühlmittelpumpe zu ermitteln. Hierzu können die hydraulischen Parameter Fördermenge und/oder Förderhöhe, die mechanischen Parameter Drehmoment und/oder Drehzahl, die magnetischen Parameter Feldstärke und/oder Flußdichte sowie die elektrischen Parameter Leistungsaufnahme, Eingangsimpedanz, Induktionsspannung und/oder Phasenverschiebung ermittelt werden. Alle diese Parameter sind geeignet, den hydraulischen Zustands des Systems anzugeben und können somit direkt oder zueinander in Beziehung gesetzt als Regelgrößen dienen.

Die erfindungsgemäße Regelung ist nicht unbedingt dazu gedacht, die übliche (witterungskorrigierte) Außentemperatursteuerung zu ersetzen. Sie kann auch als direkte Vorlauftemperaturkorrektureinrichtung mit ihr zusammenarbeiten, indem sie zusätzlich auf der Grundlage der speziellen Einstellung der (witterungskorrigierten) Außentemperatursteuerung direkt korrigierend auf die innere Führungsgröße der Vorlauftemperatur einwirkt. Durch dieses Zusammenwirken von hydraulisch optimierter und außentemperaturgesteuerter (witterungsgeführter) Regelung der Vorlauftemperatur kann eine möglichst schnelle Anpassung an Lastsprünge nicht nur am Beginn oder Ende von zeit- oder ereignisgesteuerten Aufheiz- oder Absenkungsphasen erzielt werden.

Außerdem können mit einer indirekten Vorlauftemperaturkorrektureinrichtung auf der Grundlage der (witterungskorrigierten) Außentemperatur und der äußeren Regelabweichung der hydraulischen Rückkopplung die Einstellungsparameter der (witterungskorrigierten) Außentemperatursteuerung im Sinne einer Minimierung der äußeren Regelabweichung beeinflußt werden. Dadurch können die schwer einstellbaren Parameter der (witterungskorrigierten) Außentemperatursteuerung automatisch eingestellt oder durch eine selbsttätig erfaßte Tabelle ersetzt werden.

Zur Ermittlung der äußeren Führungsgröße des hydraulischen Regelkreises erfolgt eine Adaption der Regelung an das System, indem die charakteristischen Wärme- oder Kältelastfälle wie Vollast, Lastfreiheit oder eingeschwungener Zustand aller Bedarfsstellen in Summe hydraulisch erfaßt und gespeichert werden, um im Regelfall darauf zurückgreifen zu können. Darunter ist zu verstehen, daß hydraulische und thermische Anlagenzustände fortlaufend erfaßt, gespeichert und verglichen werden, um Größen zu ermitteln, welche die regelungstechnisch relevanten Eigenschaften des jeweiligen Systems oder seiner Nutzer repräsentieren. Dies können insbesondere auch Zeitkonstanten, Amplitudenverhältnisse und/oder Phasenverschiebungen sein, wie beispielsweise Totzeiten, welche verstreichen, bis die Wirkung auf eine Ursache einsetzt, Veränderungsgeschwindigkeiten von Wirkungen im Verhältnis zur Ursache oder Überschwingungsamplituden und -zeiten. Da es sich um ein lastabhängig geregeltes und somit rückgekoppeltes System handelt, können auch sowohl die Eigenschwingungsdauer, als auch die Dauer angeregter Schwingungen und davon abhängig deren Amplituden- und/oder Phasenverläufe gemessen werden. Eine solche angeregte Schwingung stellt beispielsweise die regelmäßige Vorlauftemperaturschwankung eines Kessels mit Zweipunktbrennersteuerung dar. Desweiteren können solche Parameter gemeinsam mit benutzerabhängigen Größen, wie beispielsweise Häufigkeiten manueller Ventileingriffe, gespeichert und zu Diagnosezwecken ausgelesen und beurteilt werden. Solche Daten können insbesondere tageszeit-, wochentag- und/oder witterungskorrelliert gewichtet werden.

Außerdem kann das Verfahren ohne großen Mehraufwand zur Fernüberwachung und zur Heizkostenverteilung verwendet werden, denn es liegen innerhalb der Regelungsvorrichtung alle Informationen über den thermischen und hydraulischen Anlagenzustand vor, und wenn zusätzlich die Rücklauftemperatur gemessen wird, kann die in den Heizkreis abgegebene Wärmemenge leicht errechnet werden, da ja die Vorlauftemperatur, der Durchfluß und die Wärmekapazität des Heizmittels bekannt sind.

Außerdem kann über eine Teillast/Vollast-Normierung, die unter Berücksichtigung von Systemzeit und/oder -ereignissen berechnet wird, auf die hydraulische Führungsgröße eingewirkt werden. Dadurch kann am Ende von zeit- oder ereignisgesteuerten Absenkungsphasen der Wärme- oder Kältebereitstellung eine aktuelle Anpassung der hydraulischen Führungsgröße an die tatsächlich zu diesem Zeitpunkt angekoppelten Bedarfsstellen erfolgen.

Außerdem kann die zeitliche Änderung des hydraulischen Zustands erfaßt werden und über ein Zeitglied gefiltert auf die hydraulische Führungsgröße einwirken. Dadurch können kurzfristige Systemänderungen, wie sie beispielsweise beim Auf- oder Zudrehen von Thermostatventilen auftreten, eliminiert werden.

Außerdem ist es möglich, über die äußere Führungsgröße der hydraulischen Rückkopplung auf die Pumpenleistung einzuwirken, um auch sie an die aktuelle Bedarfssituation des Systems anzupassen. Weiterhin kann es von großem Vorteil sein, zur Steigerung der Meßgenauigkeit oder der Aussagefähigkeit der hydraulischen Zustandsgrößen $(\Phi H)_x$ die Pumpenleistung im Augenblick der Erfassung in einen oder mehrere für diesen Vorgang günstigere Betriebspunkte zu verlegen.

Außerdem ist es möglich, die Reaktionsgeschwindigkeit auf sprunghaft Laständerungen, wie beispielsweise am Ende der Nachtabsenkung, einstellbar zu machen, indem der Zeitraum, innerhalb dessen und/oder die Amplitude, mit der eine solche hydraulische Regelabweichung beseitigt werden soll, variabel einstellbar festgelegt wird.

Weiterhin ist es möglich, über die Brennerlaufzeit und/oder eine andere verbrauchsproportionale Größe sowie über die Abgastemperatur und/oder eine andere verlust- oder wirkungsgradproportionale Größe Anpassungen der Schalthäufigkeiten oder der oben beschriebenen Reaktionsgeschwindigkeit selbsttätig durchzuführen.

Darüberhinaus kann das spezielle Wirkungsgradkennfeld des Wärme- oder Kälteerzeugers unterschiedliche Regelstrategien mit jeweils angepaßten thermohydraulischen Verbraucherkennlinien erfordern, um den Nutzungsgrad zu erhöhen. Es kann im allgemeinen von folgenden Überlegungen ausgegangen werden:
Kessel und Thermen mit Feuerung können grundsätzlich als Wärmetauscher betrachtet werden. Laufen Heizungswasser und Heizgase im Gleichstrom, wie es bei den meisten konventionellen Geräten der Fall ist, so wird die Abgastemperatur erheblich von der Vorlauftemperatur bestimmt. Im Fall des Gegenstromverfahrens, wie es fast ausschließlich bei Brennwertgeräten vorkommt, bestimmt die Rücklauftemperatur die Abgastemperatur und damit die Verluste. Außerdem kann allgemein gelten, daß alle Verbrennungsvorgänge zu erhöhten Verlusten und Schadstoffemissionen führen, wenn der Vorgang zu häufig gestartet und unterbrochen wird. Weiterhin kann allgemein gesagt werden, daß alle Abstrahlungsverluste mit steigender Temperatur wesentlich stärker zunehmen, als die Wärmeleitungsverluste. Das gilt vor allem für solarthermische Kollektoren. Auch der Wirkungsgrad von Wärmepumpen steigt umso höher, je geringer die Differenz zwischen der kalten Wärmequelle und der warmen Wärmesenke ist. Zu häufige Taktraten bewirken hier ebenfalls eine Steigerung der Verluste. Wird weiterhin zugrunde gelegt, daß der vom Transportsystem übertragene Wärmestrom der Differenz von Raumtemperatur und Mitteltemperatur proportional ist, so können folgende Aussagen gelten:
Bei Gleichstromwärmetauschern, Wärmepumpen und solarthermischen Kollektoren sollten die Spreizung gering und der Durchfluß hoch gehalten werden. Lediglich bei Brennwertgeräten wird wegen der starken Abhängigkeit des Wirkungsgrades von der Rücklauftemperatur die umgekehrte Strategie empfohlen: Geringer Durchfluß und hohe Spreizung. Um bei einem derartigen System zu stabilen hydraulischen Verhältnissen zu gelangen, wird der Einbau von speziellen Armaturen in den Rücklauf der Heizkörper empfohlen. Dadurch ist es möglich, bis zu einer Mitteltemperatur von 60° bis 65°C Rücklauftemperaturen von 30°C bis 35°C nicht zu überschreiten. Der Wirkungsgradvorteil am Wärmeerzeuger darf jedoch nicht durch andere Faktoren aufgezehrt werden. So ist insbesondere im gesamten Vorlaufnetz auf eine verbesserte Isolation, auch gegenüber dem Rücklauf und ganz besonders gegen Abstrahlung, vorzunehmen. So sollte die Abstrahlung unmittelbar an der Rohroberfläche reflektiert werden, und nicht an der Außenfläche der Isolationsschicht gegen Wärmeleitung.

Außerdem ist es möglich, die Temperaturreserve, welche üblicherweise die Auslegungsunterschiede einzelner Heizkörper ausgleichen soll, durch den Fachhandwerker oder Benutzer einstellbar zu machen, um damit das thermische Zurückbleiben unterdimensionierter Heizkörper ausgleichen zu können. Im Idealfall, bei dem jeder Heizkörper bei jeder Vorlauftemperatur und der dem entsprachenden Raum zugrunde gelegten Solltemperatur die gleiche Thermostatventilöffnung hervorrufen würde, wäre die Temperaturreserve gleich null. Im Realfall muß von einer Reserve von mindestens 2°C bis 5°C ausgegangen werden. Je höher die Reserve gewählt werden muß, um eine überall ausreichend Wärme bereitstellen zu können, umso ungleichmäßiger sind die Heizkörper an den Normbedarf angepaßt und umso schlechter ist die Anlage ausgelegt.

Die Vorrichtung kann vorteilhafterweise so gestaltet werden, daß die Einrichtung zur Messung der hydraulischen Regelgröße, zur Erzeugung der hydraulischen Führungsgröße und/oder zur Ermittelung der hydraulischen Regelabweichung in der Pumpe angeordnet wird. Dadurch wird der Datentransfer auf ein Minimum reduziert.

Außerdem ist es vorteilhaft, eine Leistungsstelleirrrichtung zur Anpassung der Pumpenleistung, ein Zeitglied zur Ausfilterung von zeitlichen Änderungen der hydraulischen Regelgröße und eine zeit- oder ereignisgesteuerte Teillast/Vollast Normierung zur Anpassung der hydraulischen Führungsgröße an die aktuelle Bedarfssituation in der Pumpe anzuordnen. Eine Schnittstelle zwischen der Regelung und der Pumpe müßte dann lediglich Beginn und Ende der zeit- oder ereignisgesteuerten Absenkungsphasen in die Pumpe und die hydraulische Regelabweichung in die Regelung übertragen. Hierzu kann eine ganz spezielle Norm festgelegt werden, die es ermöglicht, Regelungen und Pumpen verschiedener Hersteller miteinander zu kombinieren.

Im folgenden wird das Verfahren und die Steuerung zur Regelung der Vorlauftemperatur anhand der Zeichnungen näher erläutert.

Es zeigt

Fig. 1 den Regelkreis einer außentemperaturgesteuerten (witterungsgeführten) Vorlauftemperaturregelung nach dem Stand der Technik,

Fig. 2 den erfindungsgemäß verschachtelten Regelkreis einer hydraulisch optimierten Vorlauftemperaturregelung,

Fig. 3 eine Weiterentwicklung des Regelkreises nach Fig. 2 am Beispiel einer Zentralheizungsanlage,

Fig. 4. ein charakteristisches hydraulisches Pumpen- und Rohrnetzkennlinienfeld,

Fig. 5. vier grundsätzliche Fälle von Wärme- oder Kältequellen mit den zugehörigen Temperaturniveaus und Wärmeströmmen zur Parametrierung der Wirkungsgradfelder,

Fig. 6. vier Kennlinien hydraulischer oder thermohydraulischer Armaturen, deren Verhalten wesentlicher Bestandteil der hydraulischen Rückkopplung ist,

Fig. 7. eine prinzipielle Realisierungsmöglichkeit der speziellen Armatur des Differenzdruck-Temperaturbegrenzers als Eckventil im Heizkörperrücklauf,

Fig. 8. die aramturenmäßig notwendige Ausrüstung der Heizkörper einer Zweirohranlage für die beiden geschilderten Regelstrategien geringe Spreizung bei hohem Durchfluß und hohe Spreizung bei geringem Durchfluß,

Fig. 9. die aramturenmäßig notwendige Ausrüstung der Heizkörper einer Einrohranlage für die beiden geschilderten Regelstrategien geringe Spreizung bei hohem Durchfluß und hohe Spreizung bei geringem Durchfluß,

Fig. 10. den prizipiellen Aufbau einer kompletten Zweirohranlage mit den installierten Varianten Außentemperatur-(Witterungs-)fühler, Raumtemperaturfühler mit Fernbedienung und Anzeige, Wärmemengen- und Abgastemperaturerfassung sowie einer Fernüberwachungs- und -diagnoseverbindung,

Fig. 11. ausgehend von einer Zentralheizungs-Zweirohranlage mit Brennersteuerung eine mögliche Ausführung zur individuellen Regelung separater Wohnungseinheiten mit individueller Programmfestlegung, optionalem Raumtemperaturfühler, Fernbedienung und Anzeige, einer zentral auswertbaren und individuell nachvollziehbaren Wärmemengenerfassung sowie einer auch dezentrale Einheiten erfassenden Fernüberwachung- und -diagnoseverbindung und

Fig. 12. das elektrische Kennlinienfeld einer Fotodiode mit Temperatur- und Lichtabhängigkeit als Beispiel für einen wesentlich verbesserten Witterungsfühler, der neben der Außentemperatur auch die Windlast und Sonneneinstahlung erfassen - und durch Zweileitertechnik in vorhandenen Installationen verwendet werden kann.

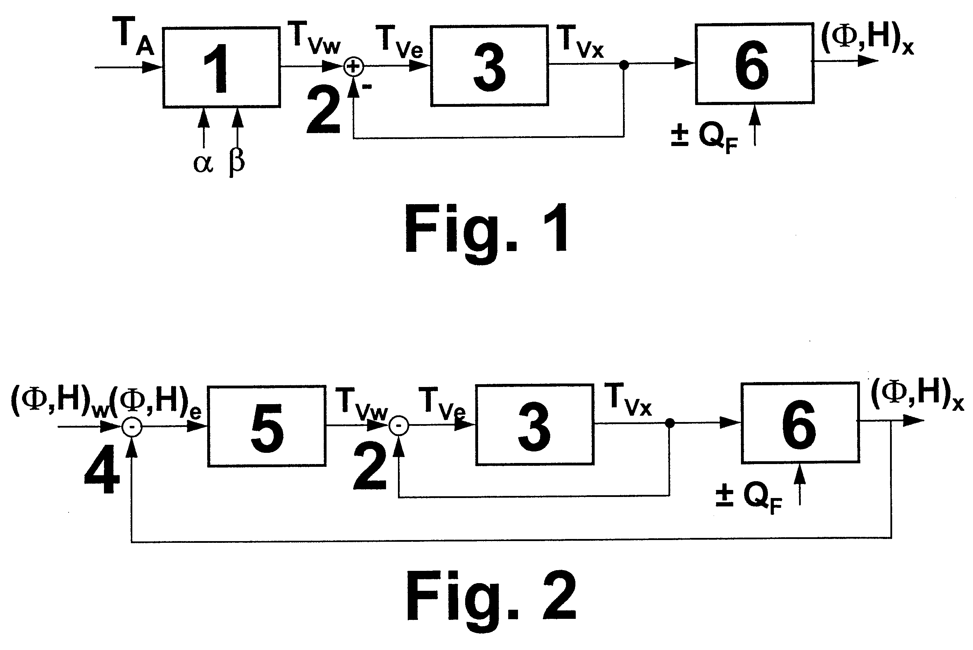

Die hydraulisch optimierte Vorlauftemperaturregelung soll im folgenden auf der Grundlage einer herkömmlichen außentemperaturgesteuerten (witterungsgeführten) Vorlauftemperaturregelung erläutert werden. Eine derartige Regelung ist in Fig. 1 gezeigt, in der die (witterungskorrigierte) Außentemperatur $[T_A]$ gemessen wird und an eine Außentemperatursteuerung [1] geleitet wird, die durch die anhand der Parameter Steilheit $[\alpha]$ und Vertikalverschiebung $[\beta]$ eingestellte Heizkurve die Führungsgröße $[T_{Vw}]$ berechnet. Diese Führungsgröße $[T_{Vw}]$ wird am Verrechnungspunkt [2] mit der Regelgröße $[T_{Vx}]$ der Vorlauftemperatur verrechnet, um die Regelabweichung $[T_{Ve}]$ zu ermitteln. Diese Regelabweichung $[T_{Ve}]$ wirkt auf eine Wärme- oder Kältequelle [3]. Als Wärme- oder Kältequelle [3] ist nicht nur die Stelle zu verstehen, an der die Wärme oder Kälte orginär entsteht, wie es beispielsweise bei einem Brenner, einem elektrischen Heizelement oder einem Kompressor der Fall ist, sondern es kann auch auf eine Stelleinrichtung eingewirkt werden, welche den Heiz- oder Kühlmittelkreislauf mit einem vorhandenen Wärme, Kälte, Brennstoff- oder Energiereservoir verbindet, wie es beispielsweise bei einem Mischer der Fall ist Wesentlich ist, daß die momentane oder mittlere Zufuhr thermischer Energie in den Heiz- oder Kühlmittelkreislauf gesteuert wird.

Da diese außentemperaturgesteuerte (witterungsgeführte) Vorlauftemperaturregelung jedoch die weiter oben beschriebenen Nachteile hat, wird in Fig. 2 das Grundprinzip einer hydraulisch optimierten Vorlauftemperaturregelung beschrieben. Dort ist um die Vorlauftemperaturregelung herum ein weiterer Regelkreis angeordnet, der auf den hydraulischen Regler [5] einwirkt. Eine spezielle Einstellung der Vorlauftemperatur $[T_{Vx}]$ hat zur Folge, daß die Bedarfsstellen [6] entsprechend dem momentanen Wärmebedarf auf eine spezielle Einstellung gebracht werden (Thermohydraulisches Verhalten der Verbraucher). Dadurch wird an der Umwälzpumpe des Heiz- oder Kühlmittelkreislaufs eine spezielle Fördermenge $\Phi$ und eine spezielle Förderhöhe H benötigt. Diese Werte oder der hydraulische Widerstand $R_h = H/\Phi^2$ werden als hydraulischer Zustand $(\Phi,H)_x$ gemessen und an der Verrechnungsstelle [4] mit einer hydraulischen Führungsgröße $(\Phi,H)_w$ verglichen, um die Regelabweichung $(\Phi,H)_e$ zu ermitteln. Diese Regelabweichung $(\Phi,H)_e$ wirkt auf den hydraulischen Regler [5], der die Führungsgröße $[T_{Vw}]$ des inneren Regelkreises der Vorlauftemperatur bestimmt.

Aus dem Vergleich der Fig. 1 und Fig. 2 ist leicht zu entnehmen, daß in Fig. 1 eine Rückmeldung über den tatsächlichen Wärmebedarf oder die zu- oder abgeführte Fremdwärme $[\pm Q_F]$ unterbleibt, während in Fig. 2 der äußere Regelkreis des hydraulischen Betriebspunktes $(\Phi,H)$ für diese Rückmeldung sorgt. Hier ist die Führungsgröße $[T_{Vw}]$ des inneren Regelkreises gesteuert durch die Regelabweichung $[(\Phi,H)_e]$ des äußeren Regelkreises. Ist die momentane Vorlauftemperatur $[T_{Vx}]$ für die aktuelle Wärme- oder Kältelast des Systems - repräsentiert durch die momentane hydraulische Ankopplung der Bedarfsstellen, welche sich ihrerseits in dem momentanen hydraulischen Arbeitspunkt $[(\Phi,H)_x]$ niederschlägt - zu niedrig oder zu hoch, so wird die Führungsgröße $[T_{Vw}]$ der inneren Vorlauftemperaturregelung angehoben oder abgesenkt, bis die Regelabweichung $(\Phi,H)_e$ des äußeren Kreises verschwindet beziehungsweise die Führungsgröße $[T_{Vw}]$ des inneren Regelkreises konstant gehalten wird. Diese Rückkopplung kann als hydraulische Rückmeldung und ihr Resultat als hydraulisch optimierte Vorlauftemperaturregelung bezeichnet werden.

Die Ermittlung der hydraulischen Führungsgröße $[(\Phi,H)_w]$ erfordert spezielle Kenntnisse über den individuellen Heiz- oder Kühlmittelkreislauf und seine Komponenten, wie beispielsweise Pumpen, Ventile, Rohrleitungsnetz, Regelverhalten der Bedarfsstellen oder Eigenschaften des Wärme- oder Kältemediums. Dadurch ergibt sich die Notwendigkeit einer Adaption der Regelung an diese individuellen Merkmale des Systems. Bleiben die zur Grundlage der Ermittlung der hydraulischen Führungsgröße herangezogenen Merkmale im Regelbetrieb konstant, so kann auch die hydraulische Führungsgröße konstant gehalten werden. Diese Konstanten können fest einprogrammiert oder manuell einstellbar sein oder durch dauernde Erfassung, Speicherung und Vergleich automatisch ermittelt werden. Unterliegen aber insbesondere hydraulische Eigenschaften Temperaturabhängigkeiten, wie es beispielsweise bei der Viskosität oder Dichte mancher Wärme- oder Kältemedien der Fall ist, so sind diese Abhängigkeiten bei der Festlegung der hydraulischen Führungsgröße zu berücksichtigen. Gleiches gilt auch für den Heiz- oder Kühlmitteltemperatureinfluß auf die Regeleinrichtungen der lokalen Bedarfsstellen, wie beispielsweise bei passiven Thermostatventilen.

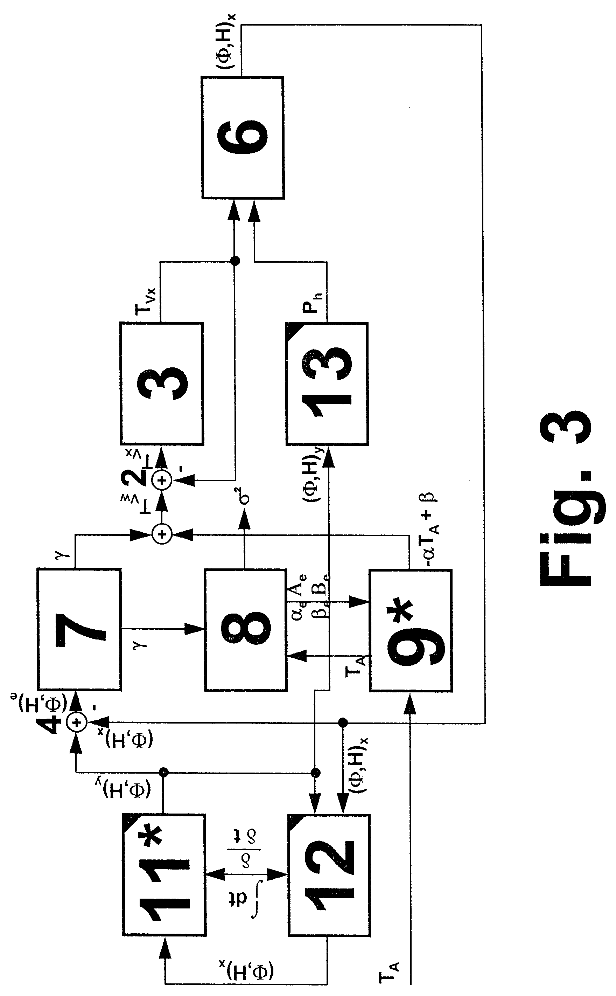

Eine weitere Anpassung der äußeren Führungsgröße $[(\Phi,H)_w]$, insbesondere durch das vollständige Entfallen bestimmter Bedarfsstellen während des Regelbetriebes zeigt die Fig. 3 am Beispiel einer Zentralheizungsanlage.

Das Problem bei der Bestimmung der Führungsgröße $[T_{Vw}]$ alleine aufgrund der hydraulischen Rückkopplung liegt in der großen Totzeit und Trägheit des Systems, denn das System muß einerseits in akzeptabler Zeit reagieren, darf aber andererseits nicht zu Über- oder Dauerschwingungen neigen. Bei der Reaktionskette Vorlauftemperatur, Raumtemperatur und Thermostatventilstellung einer Zentralheizungsanlage beispielsweise muß von Zeitkonstanten im Stundenbereich ausgegangen werden:

Wenn die Heizungsanlage morgens aus der Nachtabsenkung in den normalen Heizbetrieb umschaltet, wird der hydraulische Regler, da ja die Raumtemperatur unter den an den Ventilen eingestellten Wert abgesunken ist, zunächst vollen Wärmebedarf messen und die Vorlauftemperatur rasch steigern. Die Thermostatventile können jedoch erst reagieren, wenn sie selbst durch die Raumtemperatur erwärmt worden sind. Bis dahin kann aber bereits soviel Wärme in das System geflossen sein, daß es zu einem kräftigen Überschwingen der Raumtemperatur kommt. Dies hat zur Folge, daß anschließend für einen gewissen Zeitraum sämtliche Ventile geschlossen sind und die Vorlauftemperatur wieder stark absinkt. Nun tritt der Trägheitseffekt mit umgekehrter Wirkung erneut in Aktion. Um dieses Schwingungsverhalten zu vermeiden, darf die Vorlauftemperatur nur sehr langsam ansteigen, was dazu führt, daß es an kalten Tagen mit einem Bedarf an hohen Vorlauftemperaturen sehr lange dauert, bis das System in einen geregelten Betrieb käme. Eine optimale Anstiegsgeschwindigkeit, die beide Nachteile gleichermaßen für alle Lastfälle ausschließt, existiert nicht unbedingt. Um diesen Nachteil von Trägheit und Schwingungsneigung auszuschalten, empfiehlt sich die sogenannte direkte Vorlauftemperaturkorrektur nach Fig. 3.

Fig. 3 zeigt zunächst den prinzipiellen Regelkreis nach Fig. 2, erweitert durch eine Kombination von direkter Vorlauftemperaturkorrektur [7] und indirekter Vorlauftemperaturkorrektur [8] auf der Basis einer Außentemperatursteuerung [9] und eine Teillast/Vollast-Normierung [11] zur Anpassung der hydraulischen Führungsgröße $[(\Phi,H)_w]$, die mit einem Zeitglied [12] zusammenwirkt, sowie einen Pumpenleistungssteller [13].

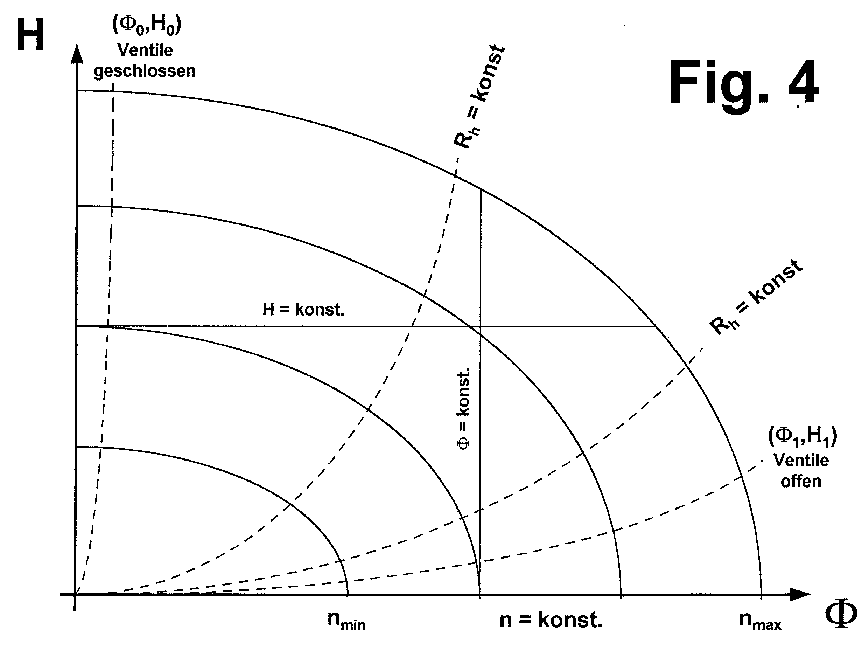

Grundlage der Regelung nach Fig. 3 ist eine Umlaufwasser-Zentralheizungs-Zweirohranlage für geringe Spreizung bei hohem Durchfluß mit Thermostatventilen an allen Heizkreisen und einer Umwälzpumpe. Wenn alle Heizkreise vollständig geschlossen sind, ist die Fördermenge $\Phi_0$ minimal und die Förderhöhe $H_0$ maximal. Wenn alle Heizkreise vollständig geöffnet sind, ist dagegen die Fördermenge $\Phi_1$ maximal und die Förderhöhe $H_1$ minimal. Die zugehörigen Arbeitspunkte stellen die Randwerte der Regelgröße $(\Phi,H)_x$ dar. Sie sind anlagenspezifisch und müssen einmal bei oder nach Inbetriebnahme gemessen und gespeichert werden. Vorzugsweise werden sie über die Pumpenkennlinie ermittelt, welche in Fig. 4 angegeben ist. Es ist möglich, die Anlage selbst die Intervallgrenzen ihres Regelraumes sukzessive selbst finden zu lassen, denn es handelt sich dabei um Werte, die per Definition nicht über- oder unterschritten werden können. Überschreitet beipielsweise ein Meßwert das bisherige Maximum, so wird er anstelle des bisherigen gespeichert und fortan zu Regelung herangezogen.

Der optimale Arbeitspunkt wird durch die Bauart von Umwälzpumpe, Ventilen, Rohrleitungsnetz und Wärmetauschern bestimmt und liegt zwischen den beiden Punkten $(\Phi_0,H_0)$ und $(\Phi_1,H_1)$. Er sollte folgende Eigenschaften haben:

Erstens sollte die Steilheit $\delta H/\delta \Phi$ der Kennlinie $H(\Phi)$ in der Umgebung des optimalen Arbeitspunktes $(\Phi_{opt},H_{opt})$ betragsmäßig möglichst groß, auf jeden Fall aber von Null verschieden und frei von Vorzeichenwechsel sein, damit die Regelgröße $(\Phi,H)_x$ signifikant ist. Zweitens sollte im allgemeinen $\Phi_{opt}$ möglichst groß und $H_{opt}$ sollte möglichst klein sein, um schnellen Wärmetransport, geringe Abgas- und Abstrahlungsverluste, geringe Neigung zu Strömungsgeräuschen und lange Brennerintervalle sicherzustellen und drittens sollte der optimale Arbeitspunkt $(\Phi_{opt},H_{opt})$ ausreichenden Abstand zu den beiden Randpunkten $(\Phi_0,H_0)$ und $(\Phi_1,H_1)$ der Kennlinie aufweisen, um beiderseitiges Überschwingen stetig ausregeln zu können.

Diese Kriterien können als notwendig angesehen werden, um gute Regeleigenschaffen zu garantieren. Es folgt, daß die Anlage frei von Bypässen und vollständig mit Thermostatventilen ausgerüstet sein soll, um einen möglichst großen und eindeutigen Regelbereich aufzuspannen.

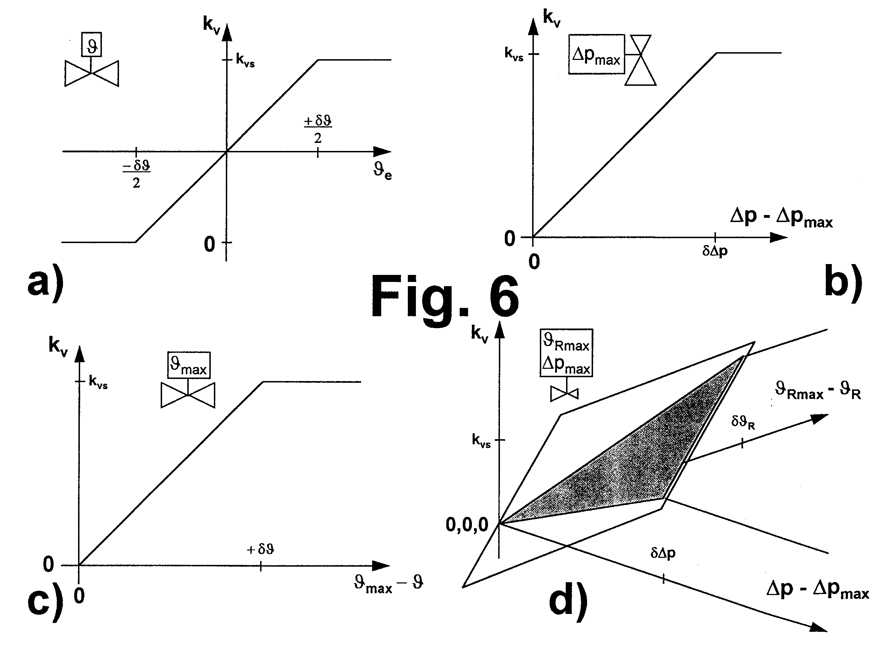

Der Hub eines Thermostatventils kann als seine Stellgröße angesehen werden, die zwischen 0 für "geschlossen" und 1 für "offen" variieren kann. Am besten kann das Ventil dann regeln, wenn seine Raumtemperatur-Regelabweichung beim Hub ½ verschwindet, denn in diesem Fall kann es Veränderungen der Raumtemperatur-Regelgröße in beide Richtungen ausgleichen. Dieses Verhalten liegt der in Fig. 6 a) dargestellten Kennlinie zugrunde. Die Achsen brauchen nicht notwendig linear zu sein; es geht um die Darstellung des prinzipiellen Verlaufes und den Einfluß des P-Regelbereiches $[\delta\vartheta]$, der bei handelsüblichen Thermostatventilen etwa 4°C beträgt und die Empfindlichkeit dieses P-Reglers beschreibt. Daher sollen alle Ventile in die Hubstellung ½ gebracht werden, uni den sich einstellenden Arbeitspunkt als den optimalen zu wählen. Hierbei ist jedoch darauf zu achten, daß der optimale Arbeitspunkt auf jeden Fall die oben beschriebenen drei notwendigen Kriterien erfüllt. Sind nämlich beispielsweise die Rohrleitungsquerschnitte so eng, daß die Ventile in der Stellung ½ praktisch keine drosselnde Wirkung mehr auf den hydraulischen Kreislauf ausüben, dann liegt der Arbeitspunkt zu nahe am Rand, um optimal im Sinne guter Regeleigenschaffen zu sein. Folglich wird der optimale Arbeitspunkt auch durch die hydraulischen Anlagenparameter beeinflußt, was bei Nachrüstung bestehender Systeme berücksichtigt werden muß. Es ist jedoch davon auszugehen, daß bei den üblichen Anlagen der hier beschriebene Arbeitspunkt $(\Phi_{1/2},H_{1/2})$ die genannten Kriterien erfüllt und somit als Führungsgröße des äußeren Regelkreises $(\Phi,H)_w$ gewählt wird. Es ist möglich, den optimalen Betriebspunkt der Anlage automatisch zu ermitteln, indem fortlaufend die Startzustände am Ende der Nachtabsenkungsphase mit der Außentemperatur und/oder der Raumtemperatur korreliert - und/oder durch gezieltes Beobachten der Totzeit, der Anstiegsgeschwindigkeit sowie der Überschwingungsamplitude und -dauer des Aufheizvorganges die Systemkonstanten gefunden werden. Liegen außer den hydraulischen keine weiteren Informationen vor, so speichert das System fortlaufend den hydraulischen Startzustand und setzt diesen ins Verhältnis zum eingeschwungenen Zustand, zur Dauer der Erreichung desselben sowie zur zugehörigen Vorlauftemperatur. Ein möglicher Weg ist dabei folgender: Zunächst wird die Vorlauftemperatur erhöht, bis es zum ersten, eindeutigen Anstiegstrend des Differenzdrucks $\Delta p$ bzw. der Förderhöhe $H$ sowie zum ersten eindeutigen Abstiegstrend des Volumenstromes bzw. der Fördermenge $\Phi$ kommt. Der Temperaturwert $[T_{Vx}]$ wird gespeichert und bei konstanter Temperatur-Sollwertvorgabe $[T_{Vw}]$ das Einschwingen des hydraulischen Arbeitspunktes abgewartet. Abschließend werden Startwert, Endwert, Vorlauftemperatur und Zeitdauer in einer Tabelle fortlaufen abgespeichert bzw. ergänzt. Als allgemeiner Anhaltspunkt kann davon ausgegangen werden, daß nach einer Nachtabsenkung, welche die Raumtemperatur mindestens 2°C unter den jeweils eingestellten Sollwert geführt haben sollte, alle nicht abgestellten Ventile ganz geöffnet sind und daß dann unabhängig von der Hydraulik des Netzes (Länge und Durchmesser der Rohre) der optimale hydraulische Widerstand $R_{hopt} = (\Phi/H^2)_{opt}$ ungefähr das zwei- bis zweieinhalbfache des Startwertes $R_{h1} = (\Phi/H^2)_1$ betragen sollte. Dieser Faktor von zwei bis zweieinhalb steht auch im direkten Zusammenhang mit der oben beschriebenen Temperaturreserve. Je höher der Faktor gewählt wird, umso höher ist die Temperaturreserve, denn umso stärker drosseln die Ventile im hydraulisch-thermischen Arbeitspunkt. Daraus folgt, daß Anlagen mit hoher Ventilpriorität mit geringer Temperaturreserve angefahren werden können.

Beim Zusammenwirken der hydraulisch optimierten mit der außentemperaturgesteuerten (witterungsgeführten) Vorlauftemperaturregelung existieren grundsätzlich zwei Mechanismen der Einwirkung auf die innere Führungsgröße [$T_{Vw}$] Die direkte Korrektur [7] und die indirekte Korrektur [8].

Bei der direkten Korrektur wirkt die Stellgröße [$\gamma$] des hydraulischen Reglers gemeinsam mit der Außentemperatursteuerung (Witterungsführung) [9] über den Additionspunkt [10] auf die Führungsgröße [$T_{Vw}$] des inneren Regelkreises der Vorlauftemperatur ein. So wird zunächst die Außentemperatursteuerung um einen direkten Korrektursummanden [$\gamma$] erweitert, der direkt durch die hydraulische Regelabweichung ($\Phi,H)_e$ berechnet wird. Aufgrund der geschilderten Nachteile der alleinigen Rückkopplung sollte [$\gamma$] auf ein bestimmtes Intervall beschränkt sein und wegen der großen Trägheit möglichst voreilend auf Trends reagieren. Für dieses Regelverhalten würde sich ein PD-Regler anbieten.

$$\gamma((\Phi,H)_e) = K_P(\Phi,H)_e + K_D\frac{\delta}{\delta t}(\Phi,H)_e$$

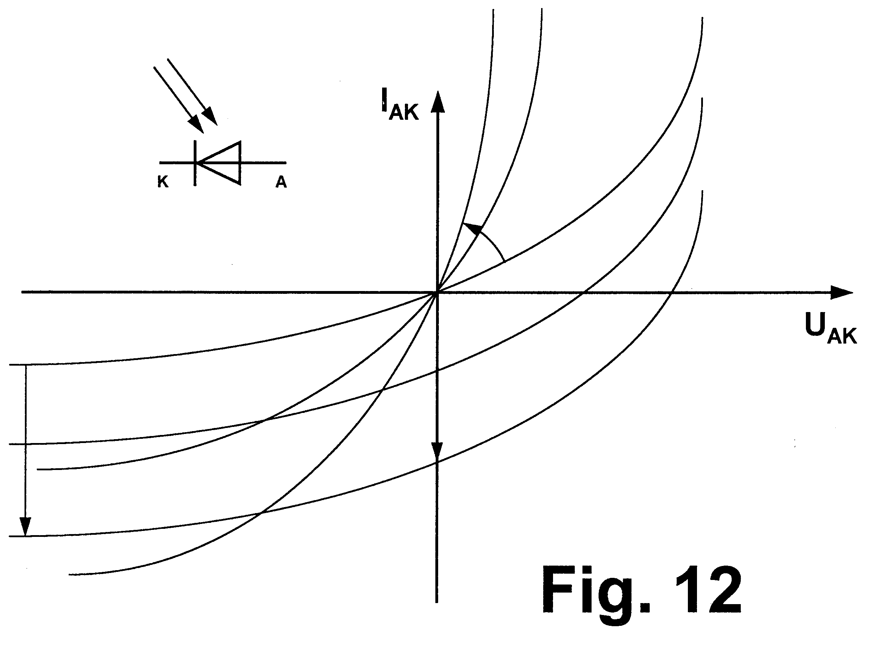

Am Ende der Nachtabsenkungsphase wird durch die Außentemperatursteuerung sofort die richtige Größenordnung der Vorlauftemperatur $T_{Vw}$ vorgegeben. [$\gamma$], das auf ein bestimmtes Intervall beschränkt ist, ist zu diesem Zeitpunkt maximal positiv und wirkt daher auf die Aufheizphase beschleunigend. Sowie sich durch die erste Reaktion der Thermostatventile der hydraulische Arbeitspunkt $(\Phi,H)_x$ zu verschieben beginnt, wird $\gamma$ reduziert und evtl. auch negativ. Das Überschwingen kann dadurch im Hinblick auf seine Größe und die Dauer der Aufheizphase durch eine geeignete Wahl der Parameter, beispielsweise des PD-Reglers, optimiert werden (aperiodischer Grenzfall zwischen gedämpftem Oszillator und Tiefpaß zweiter Ordnung). Auch bei Kombination mit Außentemperaturerfassung ist das Verfahren der fortlaufenden Speicherung zur automatischen Erfassung einer Kennlinie angebracht, auf welche dann im Regelfall zurückgegriffen werden kann. Das gleiche gilt für die Windlastkorrektur eines Witterungsfühlers. Dabei handelt es sich um einen temperaturabhängigen elektrischen Widerstand, der durch eine geeignete Regelung durch elektrische Leistungszufuhr auf der Solltemperatur des Gebäudes von etwa 20°C bzw. des Wertes [$\beta$] konstant gehalten wird. Dann ist die zugeführte elektrische Arbeit nicht nur ein Maß für die Außentemperatur, sondern für die Auskühlung des Fühlers, welche durch sämtliche Witterungseinflüsse hervorgerufen wird. Es muß also die dem Gebäude zugeführte Wärmemenge der elektrischen Arbeitszufuhr in den Fühler entsprechen. Eine weitere Neuerung, welche nicht nur im Hinblick auf solarthermische Systeme, sondern auch auf das Nutzerverhalten von Bedeutung ist, ist die Ausführung dieses elektrischen Widerstandes als lichtempfindlichen Halbleiter, beispielsweise als Fotodiode. Das Kennlinienfeld eines solchen Bauteils ist in Fig. 12 angegeben. Ausgehend von der flachsten Kennlinie durch den Ursprung des Koordinatensystems bewirkt eine Temperaturerhöhung eine „Drehung" entgegen dem Uhrzeigersinn, während eine Beleuchtung eine parallele Verschiebung nach unten verursacht. Somit ist es auf einfache Weise möglich, durch ein geeignet alternierendes Meßsignal mehrere Punkte der aktuellen Kennlinie zu erfassen und daraus eine Aussage abzuleiten, welchen Anteil die „Drehung" und damit die Temperatur bzw. welchen die Verschiebung und damit Beleuchtungsstärke an der jeweiligen Kennlinie hat. Ein derartiger Fühler sollte auch an einer besonders wind- und lichtexponierten Stelle montiert sein. Die beschriebenen Probleme der Speichereffekte lassen sich durch das objektive hydraulische Lastermittlungsverfahren ausregeln, indem zum einen die direkte Korrektur greift, und zum anderen über korrelative Filter die Speichereffekte langfristig erkannt werden. So kann auch die Zeitdauer erfaßt werden, mit der witterungsbedingte Störungen durch den Baukörper in das Innere gelangen, denn diese ist eine Eigenschaft des Mauerwerks und der Isolation, nicht aber des Temperaturverlaufes. Durch die Erfassung dieser Zeitkonstanten entsteht ein wesentlicher Informationgewinn in Bezug auf einen vorausschauenden Energieeinsatz.

Bei der indirekten Korrektur greift das System in die Parameter Steilheit [$\alpha$] und Vertikalverschiebung [$\beta$] bzw. den Fußpunkt der Heizkurve der unterlegten (witterungskorrigierten) Außentemperatursteuerung ein. Es kann auch über den Exponenten auf die meist degressive Krümmung der Heizkurve eingewirkt werden, weil genügend Meßpunkte vorliegen, um die entsprechenden Zusammenhänge nach dieser Größe aufzulösen. Der Vorgang verhält sich analog zur folgenden Vorgehensweise. Damit handelt es sich um eine automatische Parameteroptimierung, deren Problem grundsätzlich in der Konvergenz liegt, also in der Frage, ob überhaupt eindeutige optimale Parameter existieren, respektive gefunden werden können. Dies ist sicherlich möglich, wenn der Fühler eine (witterungskorrigierte) Außentemperatur mißt, die in jedem Fall für die momentane globale Gebäudelast repräsentativ ist. Ist diese Bedingung aber nicht erfüllt so könnte die Optimierung der Parameter niemals abgeschlossen werden, weil gar kein eindeutiges Optimum existiert.

Der Außentemperatur-(Witterungs-)fühler sei beispielsweise an einer Westwand montiert, die vormittags im Schatten und nachmittags in der Sonne liegt. Die Parameter [$\alpha$] und [$\beta$] seien so gewählt, daß vormittags und an bedeckten Tagen die Vorlauftemperatur richtig eingestellt wird. An sonnigen Nachmittagen wird jedoch die Wand so stark aufgeheizt, daß sie bis in den Abend hinein wesentlich wärmer als ihre Umgebung bleibt und dem Fühler folglich eine zu hohe Außentemperatur suggeriert, was dazu führt, daß an kalten Abenden nach sonnigen Nachmittagen die Vorlauftemperatur zu niedrig eingestellt wird. Es ist einleuchtend, daß dieser Fehler nicht behoben werden kann, indem eine andere Einstellung für [$\alpha$] und [$\beta$] gewählt wird, denn diese waren voraussetzungsgemäß für sonnenfreie Tage richtig gewählt. Lediglich ein Versetzen des Außentem-

peratur- bzw. Witterungsfühlers wäre erfolgverspre-chend. Das Problem der mangelnden Konvergenz kann zwar über zeitliche Mittelwertbildung gelöst werden. Dies bedeutet jedoch nicht mehr, als sich mit den Werten für [$\alpha$] und [$\beta$] zufriedenzugeben, die im zeitlichen Mittelwert den geringsten Fehler hervorrufen.

Sind die Parameter [$\alpha$] und [$\beta$] perfekt gewählt, so ist der Tagesmittelwert von $\gamma$,

$$\Gamma = K_{I_\Gamma} \int_{morgens}^{abends} \gamma dt$$

weitgehend gleich null oder anders ausgedrückt: $\Gamma$ ist ein Maß für die Abweichung der eingestellten Parameter [$\alpha$] und [$\beta$] von Ihnen Optimalwerten $\alpha_{opt}$ und $\beta_{opt}$ an diesem betreffenden Tag. Man kann bei [$\gamma$] also auch von einem Maß für die Regelabweichung [$\alpha_e$] und [$\beta_e$] der Parameter [$\alpha$] und [$\beta$] bei der zugehörigen (witterungskorrigierten) Außentemperatur [$T_A$] sprechen. Aus den bekannten Größen [$\gamma$] und [$T_A$] können die unbekannten Größen $\alpha_{opt}$ und $\beta_{opt}$ berechnet werden. Dabei ist davon auszugehen, daß [$\alpha$] bei niedrigen und [$\beta$] bei hohen Außentemperaturen einen bestimmten Einfluß auf die Vorlauftemperatur-Führungsgröße [$T_{VW}$] ausübt. Die Berechnung erfolgt über eine Funktion, die die bekannte Abweichung [$\gamma$] in Abhängigkeit von der (witterungskorrigierten) Außentemperatur [$T_A$] auf die beiden Parameter verteilt. Diese Verteilung kann beispielsweise so aussehen, daß bei $T_A \leq -20°C$ $\gamma$ zu 100 % zur Korrektur von [$\alpha$] verwendet im Bereich $T_A \in [-20°C, 20°C]$ linear gemischt und bei $T_A \geq 20°C$ $\gamma$ zu 100 % zur Korrektur von [$\beta$] verwendet wird. Mathematisch exakt mit Hilfe der Rampenfunktion

$$\zeta(x) = \begin{cases} = 0 \Leftarrow x < 0 \\ = x \Leftarrow 0 \leq x \leq 1 \\ = 1 \Leftarrow 1 < x \end{cases}$$

läßt sich die Verteilung von [$\gamma$] in einen $\alpha$- und einen $\beta$-Bestandteil vornehmen:

$$\gamma_\alpha = \gamma \cdot \zeta\left(\frac{20°C - T_A}{40°C}\right)$$

$$\gamma_\beta = \gamma \cdot \zeta\left(\frac{20°C + T_A}{40°C}\right)$$

Damit erhält man für die Abweichung [$\alpha_e$] und [$\beta_e$] der Parameter [$\alpha$] und [$\beta$]:

$$\alpha_e = \frac{\gamma_\alpha}{20°C - T_A}$$

$$\beta_e = -\gamma_\beta$$

Die hier vorgeschlagene lineare Verteilungsfunktion $\zeta$ ist dabei nicht entscheidend, sondern vielmehr die Tatsache, daß aus den beiden bekannten Größen [$\gamma$] bzw. $\Gamma$ und [$T_A$] die beiden unbekannten Größen [$\alpha_e$] und [$\beta_e$] berechnet werden. Zum Ausgleich dieser Abweichungen würde ein sehr genauer Regler benötigt, der aber nicht sonderlich schnell sein mußte, da die Veränderung der Parameter ohnehin eine Langzeitaufgabe darstellt Hier würde sich ein I-Regler anbieten, der auch das Verfahren der zeitlichen Mittelwertbildung unterstutzen und Konvergenz garantieren würde.

$$\alpha = K_{I\alpha} \int \alpha_e dt$$

$$\beta = K_{I\beta} \int \beta_e dt$$

Die Zeitkonstanten für die Integration müssen sehr groß sein, weshalb eine zweistufige Vorgehensweise empfohlen wird. Zunächst werden während der Tageszeitphase die Werte für [$\alpha_e$] und [$\beta_e$] zu einem Tagesmittelwert [$A_e$] und [$B_e$] integriert:

$$A_e = K_{I_{A_e}} \int_{morgens}^{abends} \alpha_e dt$$

$$B_e = K_{I_{B_e}} \int_{morgens}^{abends} \beta_e dt$$

Bei diskreter Summation brauchen die Werte nicht häufiger aufgenommen zu werden als der Zeitraum, in dem eklatante (witterungskorrigierte) Außentemperatur- oder $\gamma$-änderungen stattfinden können, also etwa $\tau \approx 15$ min. Diese Tagesmittelwerte werden anschließend in einem zweiten Speicher iterativ gemittelt aufaddiert, der mindestens eine ganze Heizperiode umfassen sollte, damit die Jahreshöchst- und Tiefstwerte erfaßt werden.

$$\alpha_{n+1} = \frac{n}{n+1} A_e + \frac{1}{n+1} \Sigma \alpha_n$$

$$\beta_{n+1} = \frac{n}{n+1} B_e + \frac{1}{n+1} \Sigma \beta_n$$

mit $n \in N$ und den Startwerten $\alpha_1$ und $\beta_1$. Zu empfehlen wäre ein Speicher, der datums- oder außentemperatur-(witterungs-)bezogen diese Tagesmittelwerte $\alpha$ und $\beta$ aufnimmt und jeweils den Wert des älteren gegen den des aktuellen Datums und/oder der aktuellen witterungskorrigierten Außentemperatur ersetzt oder mittelt. Auf diese Weise strebt der Speicherinhalt gegen einen vollständigen und aktuellen Jahreszyklus. Alternativ zu diesem Verfahren der Beeinflussung der Heizkennlinie

über die Parameter $\alpha$ und $\beta$ kann die Funktion $T_{Vw}(T_A)$ auch direkt als Tabelle abgespeichert werden. Zwischenwerte werden dabei durch statistische Methoden interpoliert.

Durch die Mittelwertbildung ergibt sich die Möglichkeit, einen Streuparameter $[\sigma^2]$ zu definieren, der über die Güte der erreichten Optimierung Auskuft gibt. Hier bietet sich der quadratische Mittelwert von $[\gamma]$ an:

$$\sigma^2 = K_{I\sigma} \int \gamma^2 dt$$

Je besser die Parameter $[\alpha]$ und $[\beta]$ optimiert sind, um so kleiner ist der quadratische, nicht-negative Mittelwert $[\sigma^2]$. Wie oben dargelegt, kann $[\sigma^2]$ positiv und damit von Null verschieden sein, wenn $\Gamma = 0$ ist.

Da das Gebäudemauerwerk ebenfalls Wärme speichert, existiert wie bereits erwähnt eine charakteristische Zeitkonstante, welche das Wärmedurchgangsverhalten beschreibt. Auch diese Größe kann durch Korrelation der hydraulischen Korrekturgröße $\gamma$ mit der (witterungskorrigierten) Außentemperatur ermittelt, gespeichert und zum Regelzweck verwendet werden.

Das Zusammenwirken des inneren Regelkreises für $[T_{Vx}]$ mit der direkten Vorlauftemperaturkorrektur [6], der indirekten Vorlauftemperaturkorrektur [8] und der Außentemperatursteuerung [9] ist in Fig. 3 dargestellt.

Außerdem zeigt Fig. 3 die Teillast/Vollastnormierung durch Nachtabsenkung. Grundsätzlich ist es möglich, daß nicht alle Heizkreise ständig in Betrieb sind. So werden im allgemeinen bestimmte Räume einer Wohnung nur bei Bedarf beheizt Auch ist der Fall denkbar, daß in einem Mehrparteienhaus in einer oder mehreren Wohnungen wegen Abwesenheit sämtliche Heizkreise geschlossen sind. Dieses Problem kann gelöst werden, indem das Ende der Nachtabsenkungsphase als zeitpunktbezogene Normierungsgrundlage $(\Phi_1, H_1)(t)$ für den individuellen Tagesbedarf herangezogen wird, da ja zu diesem Zeitpunkt sämtliche Thermostatventile durchgeheizter Räume geöffnet sind, wenn man davon ausgeht, daß nach mehreren Stunden eine Raumtemperaturabsenkung von einigen °C gegenüber der eingestellten Raumtemperatur-Führungsgröße erreicht wurde. Wird unterstellt, daß am Ende der Nachtabsenkungsphase ein bestimmter Teil aller Heizkörper ganz abgeschaltet ist, dann kann dies in diesem Moment erkannt und zur Berechnung der zeitbezogenen Führung $(\Phi, H)_w(t)$ verwendet werden, beispielsweise durch geeignete Interpolation. Durch Korrelation mit der (witterungskorrigierten) Außentemperatur, der Raumtemperatur und/oder den bereits beschriebenen Mechanismen der Erfassung der Totzeit, der Anstiegsgeschwindigkeit und des Überschwingens kann weiterhin erkannt werden, wie groß die Regelabweichung der eingeschalteten Ventile und damit die Raumtemperatursollwertabweichung ist. Dabei wird auf den oben genannten Zusammenhang zwischen Temperaturreserve und Anstiegsfaktor des hydraulischen Widerstandes verwiesen.

Außerdem ist in Fig. 3 ein Zeitglied [12] zur Ausfilterung manueller Laständerungen vorgesehen. Manuelle Eingriffe im Laufe eines Tages ändern die zeitpunktbezogene Normierungsgrundlage $(\Phi_1, H_1)_{(t)}$ und müssen deshalb zur Anpassung der zeitbezogenen Führungsgröße $(\Phi, H)_w(t)$ verwendet werden. Es muß also unterschieden werden, ob es sich bei einer Regelgrößenänderung $\delta(\Phi, H)_x$ um die Folge eines manuellen Eingriffs oder des Regelverhaltens der Ventile handelt. Da manuelle Eingriffe im Sekundenbereich stattfinden, das Regelverhalten der Ventile aber mindestens im Minutenbereich, können diese über ein Zeitglieder ausgefiltert werden. So kann eine schnelle Arbeitspunktänderung die $\delta(\Phi, H)_x/\delta t \ll \tau \approx 1\,min$, wie es beispielsweise das manuelle Auf- oder Zudrehen einzelner Ventile bedeutet, zu einer Änderung der Führungsgröße $\delta(\Phi, H)_w$ verwendet werden. Hierzu dient vorzugsweise ein PID-Regler mit vorgeschaltetem Zeitfilter. Dadurch wird die erfolgte Regelgrößenänderung $\delta(\Phi, H)_x$ durch eine entsprechende Führungsgrößenänderung $\delta(\Phi, H)_w$ wieder aufgehoben, was dazu führt, daß die Regelabweichung $(\Phi, H)_e$ und damit auch die Führungsgröße $T_{Vw}$ des inneren Kreises konstant bleibt. Eine langsame Arbeitspunktänderung mit einer Änderungszeit $\delta(\Phi, H)_x/\delta t \gg \tau \approx 1\,min$ aufgrund des Regelverhaltens ganzer Ventilgruppen hingegen würde die Führungsgröße $(\Phi, H)_w$ konstant belassen und über die Änderung der Regelabweichung $\delta(\Phi, H)_e$ zur gewünschten Korrektur der Führungsgröße $\delta T_{Vw}$ führen.

Das "Sternchen" in Fig. 3 an der Teillast/Vollast-Normierung [11] und der Außentemperatursteuerung [9] soll andeuten, daß die Systemzeit, also beispielsweise der Zeitpunkt der Nacht-Tag-Umschaltung, oder andere ereignisgesteuerte Vorlauftemperaturabsenkungen, wie beispielsweise der Boilervorrangbetrieb eines Kessels in Verbindung mit einem indirekt beheizten Brauchwasserspeicher, zwischen diesen Systemteilen übertragen werden muß. In der Abbildung wird vom aktuellen Zeitbezug sämtlicher Größen auch ohne besondere Kennzeichnung ausgegangen.

Als weitere Systemkomponente zeigt die Fig. 3 den Pumpenleistungssteller [13]. Verschiebt sich bei Laständerungen die Führungsgröße $[(\Phi, H)_w]$ zu nah an einen der Randpunkte $[(\Phi_0, H_0)]$ oder $[(\Phi_1, H_1)]$, so kann dies durch eine entsprechende Leistungsanpassung der Pumpe korrigiert werden. Dies kann notwendig sein, da, wenn zuviele Heizkreise geschlossen sind, sich auch mit einer optimierten Vorlauftemperatur Strömungsgeräusche an den verbleibenden Ventilen nicht ausschließen lassen. Hierzu werden zwei Regelverfahren vorgeschlagen:

Bei der Mehrpunktregelung wird die hydraulische Leistung $P_h$ der Pumpe durch die Führungsgröße $[(\Phi, H)_w]$ in bestimmten Stufen variiert. Diese spunghaften Leistungsänderungen $\delta P_h/\delta t \ll \tau \approx 1\,min$ führen zu spunghaften Änderungen der Regelgröße $\delta(\Phi, H)_x$ und in Verbindung mit dem oben beschriebenen Zeitglied auch zu einer Führungsgrößenänderungen $\delta(\Phi, H)_w$ mit

dem Ergebnis, daß die Regelabweichung $[(\Phi,H)_e]$ und damit auch die Führungsgröße $[T_{Vw}]$ konstant bleibt. Da hier eine schnelle Rückkopplung vorliegt, muß die Hysterese geeignet gewählt werden, um Dauerschwingungen zu verhindern.

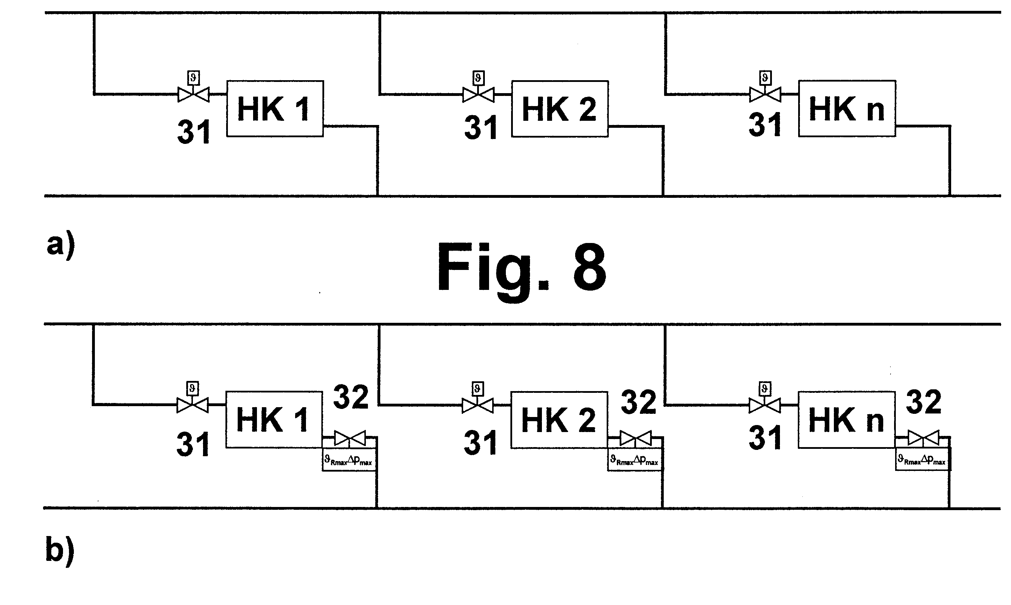

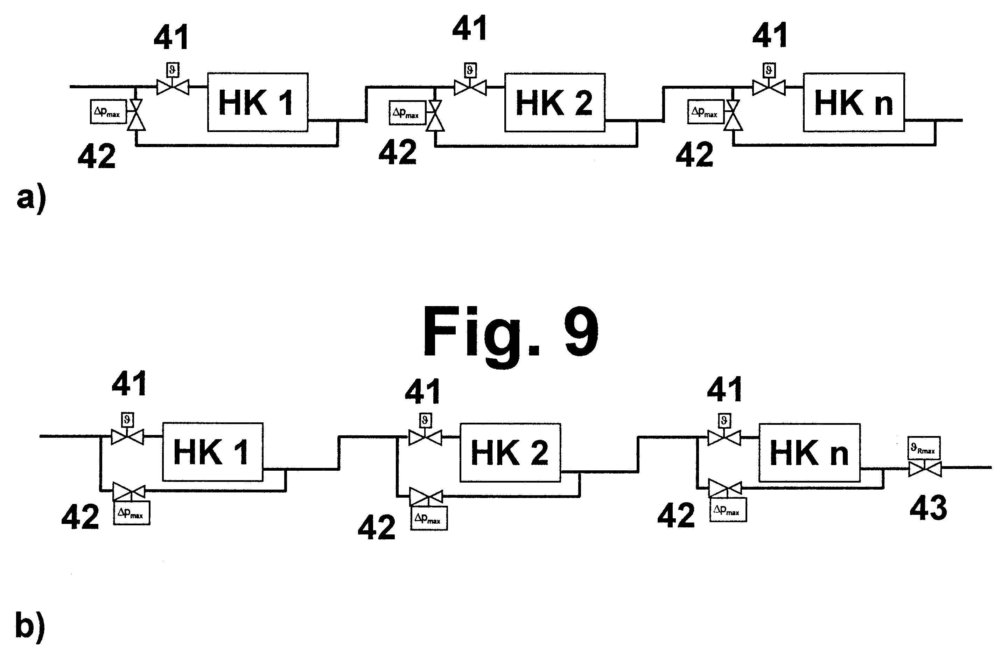

Bei der Stetigregelung wird die Drehzahl stufenlos geändert. Um hierbei keinen Konflikt der beiden Regelgrößen Pumperleistung $[P_H]$ und Vorlauftemperatur-Korrektur $[\gamma]$ zu provozieren, sollten sie auf verschiedene Führungsgrößen abgestimmt werden. Bei den bisherigen Beschreibungen war es freigestellt, ob der hydraulische Arbeitspunkt $[(\Phi,H)_x]$ als eine ein- oder zweidimensionale Größe erfaßt und behandelt wurde. Da er nur direkt oder indirekt zur Rechnungsgrundlage der eindimensionalen Führungsgröße $[T_{Vw}]$ verwendet wurde, hätte ohnehin an irgendeiner Stelle eine entsprechende Zusammenfassung, beispielsweise durch die Quotientenbildung $R_h = H/\Phi^2$, stattfinden müssen. Wird aber davon ausgegangen, daß beide Größen $\Phi_x$ und $H_x$ des Arbeitspunkts bekannt sind, so bietet es sich bei Zweirohranlagen gemäß Fig. 8 an, $H_w$ als konstante Führungsgröße für die Regelgröße $H_x$ vorzugeben, wobei die Pumperleistung $[P_H]$ die Stellgröße wäre. Bei Einrohranlagen, deren Heizkörper HK1..n gemäß Fig. 9 neben den Thermostatventilen [41] mit Differenzdruckbegrenzern [42] im Bypass ausgestattet sein sollen, bietet sich hingegen an, den Durchfluß $\Phi_x$ konstant zu regeln und $H_w$ zur hydraulischen Führungsgröße des inneren Temperaturregelkreises zu machen. Dieses käme besonders den Thermen entgegen, welche im Gegensatz zu den Kesseln einen Mindestwasserumlauf benötigen. Dadurch kann das sonst übliche Überstromventil entfallen. Dieser Kreis muß so schnell reagieren, daß er bei Laständerungen seine Drehzahlanpassung innerhalb der oben beschriebenen Zeitkonstante $\tau \approx 1$ min abgeschlossen hat. Dabei könnte im Fall der Zweirohranlagen die konstante Führungsgröße $H_w$ an der Zentrale manuell einstellbar sein, um sich gegebenen Anlagen individuell anzupassen. Die verbleibende Führungsgröße $\Phi_w$ wird dann über die Regelgröße $\Phi_x$ und die Korrekturgröße $[\gamma]$ zur Regelung des inneren Kreises der Vorlauftemperatur $[T_{Vx}]$ verwendet. In diesem Falle hätte man also ein System, welches bei konstant gehaltener Förderhöhe $H_w$ die Fördermenge $\Phi_x$ rückkoppeln würde, um die Vorlauftemperatur zu optimieren. Bei Einrohranlagen gilt entsprechendes für $\Phi_w$., welches manuell einstellbar wäre und zur Pumpenregelung verwendet würde. Der hydraulisch erfaßte Lastzustand würde in diesem Fall über den Druckverlauf erfaßt. Das Regelverhalten sieht folgendermaßen aus: Sind alle Ventile geschlossen, liegt wegen der konstant eingestellten Fördermenge praktisch die Summe aller Bypass-Druckbegrenzer [42] an der Pumpe an. Je weiter die Thermostatventile [41] öffnen, umso mehr sinkt der Differenzdruck bzw. die Förderhöhe $H_x$, welche somit direktes Maß des Wärmebedarfes ist.

Ziel dieser Leistungssteuerung ist allgemein, die Führungsgröße $[(\Phi,H)_w]$ für alle lastfälle in einem optimalen Bereich hydraulischer Stabilität und günstiger Gesamtwirkungsgrade zu halten. Bei einer solchen Einbeziehung der hydraulischen Pumpenleistung $[P_h]$ in das Reglungskonzept müssen die oben genannten Globalparameter $[(\Phi_0,H_0),(\Phi_1,H_1),(\Phi_{1/2},H_{1/2}),(\Phi_{opt},H_{opt})]$ für alle Pumpenleistungen $P_{hmax} \geqq P_h \geqq P_{hmin}$ bekannt sein, was bedeutet, daß aus den genannten Betriebpunkten Abschnitte der Rohrnetzkennlinien werden. Dieses Verfahren kann auch genutzt werden, um den Betriebspunkt zum Zwecke einer genaueren Messung kurzfristig gezielt zu verschieben. Notwendige Bedingung ist, daß Regler und Pumpe in ihrem Verhalten aufeinander abgestimmt sind.

Die in Fig. 3 mit einem schwarzen Dreieck gekennzeichneten Baugruppen Teillast/Vollast-Normierung [11], Zeitglied [12] und Pumpenleistungssteller [13], sollten in der Umwälzpumpe untergebracht sein, um den Datentransfer auf ein Minimum zu reduzieren. Die notwendige Schnittstelle müßte dann lediglich Beginn und Ende der zeit- oder ereignisgesteuerten Vorlauftemperatur-Absenkungsphasen in die Pumpe und die hydraulische Regelabweichung in die Regelung übertragen. Hierfür würde sich eine noch zu definierende Norm empfehlen.

Fig. 3 zeigt auch das Zusammenspiel dieser einzelnen Systemkomponenten. Ausgehend von dem inneren Regelkreis der Vorlauftemperatur $T_V$, dessen Führungsgröße $[T_{Vw}]$ durch Addition der Ausgangswerte der unterlegten (witterungskorrigierten) Außentemperatursteuerung $[-\alpha T_A + \beta]$ und der direkten Vorlauftemperaturkorrektur $[\gamma]$ im Additionspunkt [10] entsteht, entspricht die Darstellung in Fig. 3 einer Addition der Figuren 1 und 2, wobei der äußere Regelkreis die direkte Vorlauftemperaturkorrektur beschreibt. Die indirekte Vorlauftemperaturkorrektur [8] erhält ebenfalls den Wert $[\gamma]$ von der direkten Vorlauftemperaturkorrektur [7] und weiterhin die (witterungskorrigierte) Außentemperatur $[T_A]$ aus der Außentemperatursteuerung [9]. Sie berechnet daraus die Regelabweichungen $[\alpha_e]$ und $[\beta_e]$ bzw. $[A_e]$ und $[B_e]$, die ihrerseits an die Außentemperatursteuerung zurückgegeben werden. Außerdem stellt die indirekte Korrektur [8] den Streuparameter $[\sigma^2]$ zur Verfügung. Von der hydraulischen Regelgröße $[(\Phi,H)_x]$ werden über das Zeitglied [12] nach der Formel $\delta(\Phi,H)_x/\delta t \ll \tau \approx 1$ min manuelle Eingriffe ausgefiltert und über die Teillast/Vollast-Normierung [11] zur Anpassung der hydraulischen Führungsgröße $[(\Phi,H)_w]$ verwandt. Um das Ende der Absenkung erkennen zu können, muß die indirekte Korrektur eine Verbindung zur Systemzeit und -steuerzentrale in der Außentemperatursteuerung besitzen. Im Falle der Pumpenleistungssteuerung wird die hydraulische Führungsgröße $[(\Phi,H)_w]$ auch auf den Pumpenleistungssteller [13] gegeben. Auf eine hydraulische Signalaufschaltung in $\Phi$ und $H$ für den Fall der Stetigregelung ist hier verzichtet worden.

Zur Integration einer ungeregelten Fußbodenheizung ist es bei geeigneter Auslegung der Schleifelängen möglich, den Rücklauf des durch die Heizkörperventile thermostatisch geregelten Kreises mit dem Vorlauf der Fußbodenheizung zu verbinden. Diese wird dabei besser in die Optimierung einbezogen, als wenn sie parallel nebenher betrieben würde. Außerdem begünstigt das System mit seinen gezielt hohen Fördermengen diese Verkettung. Die Verbindung kann dabei einzeln, raumweise, wohnungsweise und zentral erfolgen. Eine Dehnstoffweiche (Rücklauftemperaturbegrenzer) kann die Vorlauftemperatur für die Fußbodenheizung sicherheitshalber auf das zulässige Maß begrenzen.

Prinzipiell ist es auch möglich, derartige hydraulische Systeme zu verketten, in dem eine Fernwärmezentrale oder Blockheizzentrale die Vorlauftemperatur aufgrund hydraulischer Rückmeldung korrigiert, nachdem zuvor die einzelnen Wohnhäuser ihre Vorlauftemperaturen dein Wärmebedarf der Thermostatventile in den einzelnen Räumen angepaßt haben. Die Verkettung unterstutzt sogar noch die Regeleigenschaft des Systems.

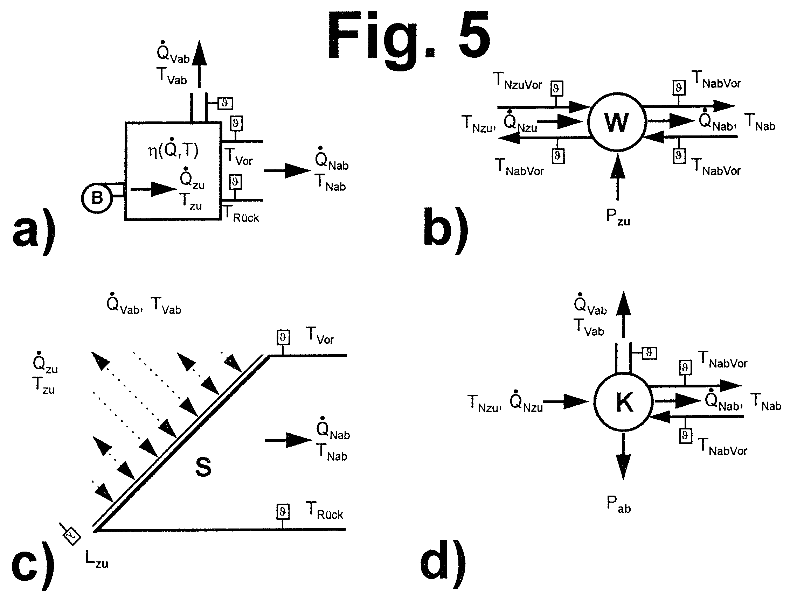

Zurückkommend auf die beschriebenen Unterschiede der Brennwertkessel mit Gegenstromwärmetauschern zu konventionellen mit Gleich- oder Kreuzstromwärmetauschern soll noch auf Fig. 5 eingegangen werden. Abb. a) zeigt einen Wärmeerzeuger mit Brenner, dem auf dem Temperaturniveau $T_{zu}$ Wärme $Q_{zu}$ zugeführt wird und der über das Abgas auf dem Temperaturniveau $T_{Vab}$ die Verlustwärme $Q_{Vab}$ abführt. An das Wärmetransportsystem wird dabei auf dem Temperaturniveau $T_{Nab}$ die Nutzwärme $Q_{Nab}$ abgegeben, welche sich aus der Temperaturspreizung und der umgewälzten Wassermenge ergibt. Der Wirkungsgrad $\eta$ ergibt such aus dem Verhältnis von Nutzwärme zu Wärmeeinsatz. Während des Betriebes kann $\eta$ jedoch überwacht werden, indem der Zusammenhang von Brennerlaufzeit als verbrauchsproportionaler Größe und Abgastemperatur als verlustproportionaler Größe gemessen wird. Desweiteren geht der Ansatz der hydraulisch optimierten Vorlauftemperaturregelung davon aus, daß ein Wärmetransport, der ja immer mit Abkühlung verbunden ist, weil sich Wärme nur vom höheren zum niedrigeren Temperaturniveau bewegt, umso verlustärmer geführt wird, je geringer diese Temperaturunterschiede gehalten werden können. Dadurch wird grundsätzlich das Modell hoher Durchfluß bei geringer Spreizung empfohlen. Nur im speziellen Fall eines Wirkungsgradfeldes, welches eine hohe Spreizung erfordert soll davon abgewichen werden, aber auch nur dann, wenn sich in Verbindung mit entsprechenden Isolationsmaßnahmen der Gesamtwirkungsgrad steigern läßt. Fig. 5 Abb. b) zeigt einen Wärmetauscher, eine Wärmepumpe oder eine Wärmeübergabe (z.B.: Mischerventil, Verteilerventil) W, der Nutzwärme einem Temperaturniveau $T_{Nzu}$ entnimmt und sie auf dem Temperaturniveau $T_{Nab}$ an das Wärmetransportsystem übergibt. Im Fall der Wärmepumpe muß noch die Arbeit $P_{zu}$ zugeführt werden, wodurch $T_{Nzu}$ aber unter $T_{Nab}$ sinkt. Auch der Wirkungsgrad dieses Systems läßt sich durch Messung der entsprechenden Temperaturen (Mittelwert, Spreizung oder Vorlauf, Rücklauf) leicht erfassen und bei der Regelung berücksichtigen. Beim Solarsystem gemäß Fig. 5 Abb. c) wird die zugeführte Wärmemenge von der Sonnenbestrahlung festgelegt, während die Abstrahlung eine Funktion der mittlern Nutztemperatur $T_{Nab}$ ist. Durch einen Lichtdetektor [λ] kann die Umwälzmenge reduziert werden, wenn die Sonneneinstrahlung nachläßt, noch bevor das System durch Abühlung Wärme verliert, was erst verspätet durch Temperaturmessung erkannt werden kann. Fig. 5 Abb. d) beschreibt die Energieströme einer Kraftmaschine mit Wärmeauskopplung. Auch hier gilt, daß der Wirkungsgrad der Wärmeübertragung durch Messung der Temperaturen leicht ermittelt werden kann.

Anschließend soll noch auf die Fig 8 Abb. a) und b) sowie Fig. 9 Abb. a) und b) eingegangenen werden. Fig 8 Abb. a) enthält das übliche Schema einer Zweirohranlage mit konventionellem Heizkessel für möglichst niedriger Spreizung, was bei entsprechender Leistung nur mit hohem Durchfluß zu realisieren ist. Die entsprechende Regelstrategie ist in Fig. 9 Abb. a) für eine Einrohranlage beschrieben. Das Regelspiel wurde oben bereits geschildert.

Ausgehend von der Idealbedingung, den Rücklauf ständig auf der Temperatur zu halten, welche im Brennwertgerät Kondensat anfallen läßt, wird in der Einrohranlage gemäß Fig. 9 Abb. b) ein Temperaturbegrenzerventil [43] in den Rücklauf hinter den letzten Heizkörper eingebaut, das bei Überschreiten der eingestellten Wassertemperatur von 35°C bis 40°C schließt. Die Regelkennlinie ist in Fig. 6 Abb. c) angegeben. [δϑ] liegt hier ebenfalls in der Größenordnung von 5°C. Die Anlage wird wieder mit konstantem Volumenstrom bzw. konstanter Fördermenge gefahren. Steigt der Druck bis zur Summe der installierten differenzdurckgeregelten Bypassventile [42] gemäß Kennlinie Fig 6 Abb. b), so ist die Vorlauftemperatur zu hoch. Die Reaktion des Reglers wäre eine Senkung der Vorlauftemperatur. Steigt der Druck jedoch weiter, so muß der Volumenstrom reduziert werden, weil die Rücklauftemperatur zu hoch ist und infolge dessen der Begrenzer anspricht, der ja keinen Bypass hat. Hier kann die Pumpe auf konstanten Differenzdruck umgeschaltet werden (Zweifach geregelte Kennlinie). Bei Thermen in Etagenwohnungen kann auch ohne Temperaturbegrenzer die Rücklauftemperatur überwacht - und im Falle des Überschreitens Pumpe und Heizung abgeschaltet werden. Die Therme ist ohnehin gut für hohe Spreizungen geeignet.

Bei der Zweirohranlage gemäß Fig. 8 Abb. b) erhält jeder Heizkörper HK1..n neben dem Thermostatventil [31] einen Differenzdruck-Temperaturbegrenzer [32] mit Kennlinien gemäß Fig. 6 Abb. d). Diese Maßnahme ist notwendig, um auch bei geringsten Fördermengen hydraulische Stabilität zu erzwingen. Die Pumpe wird auf konstant geringe Fördermenge eingestellt, sodaß $H_x \approx \Delta p_{max}$ ist. Steigt der Differenzdruck bzw. die Förderhöhe weiter an, muß die Vorlauftemperatur gesenkt werden, weil die Thermostatventile abregeln. Steigt hingegen am Kessel die Rücklauftemperatur, so muß der Volumenstrom bzw. die Fördermenge reduziert werden. Auf diese Weise ist es möglich, bestehen 70°/50°C-Anlagen praktisch ganzjährig im Brennwertverfahren zu betreiben. Es muß allerdings erneut auf eine Überprüfung der isolationstechnischen Voraussetzungen im Hinblick auf den Gesamtnutzungsgrad der Anlage hingewiesen werden.

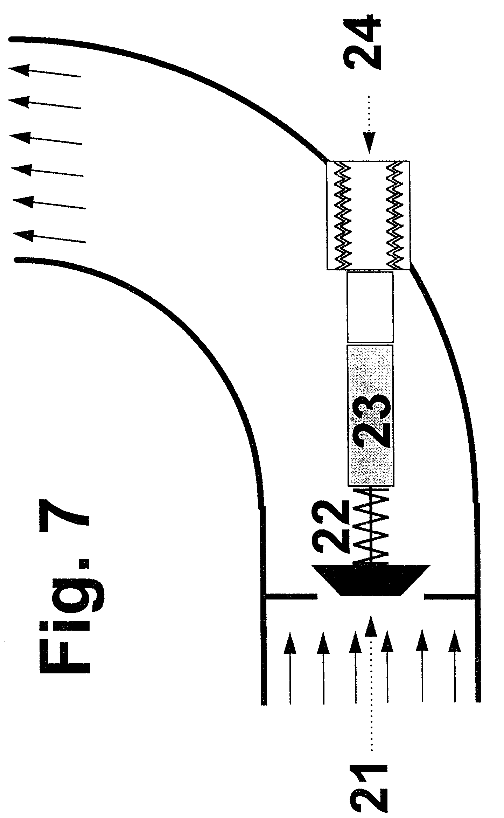

Das zweidimensionale Kennfeld des Differenzdruck-Temperaturbegrenzers ist in Fig 6 Abb. d) dargestellt. Durch die durch das Dreieck $\{(0,0,0);(\delta\vartheta_R,0,k_{vs});(0,\delta\Delta p,k_{vs})\}$ aufgespannte schräge Ebene kann in einem bestimmten Bereich das Schließen des Ventils aufgrund einer Temperaturerhöhung durch einen Druckanstieg wieder kompensiert werden. Dadurch wird in diesem bestimmten Bereich ein äußerst günstiges thermo-hydraulisches Verbraucherverhalten erreicht. In Fig 7 ist eine vorteilhafte Ausführung als Heizkörperrücklauf-Eckventil prinzipiell dargestellt. Hierbei wirkt eine thermischer Dehnungskörper [23] in Reihe mit einer vorgespannten Feder [22] auf den Hub eines Ventils. Vor dem Einbau kann entweder durch Verschraubung [21] oder durch Unterlegen die Federvorspannung und damit $\Delta p_{max}$ geändert werden. Während des Betriebeszustandes kann der Temperaturarbeitpunkt von außen nachgeregelt werden, indem über ein Schraubengewinde [24] der Abstand der Einheit zum Ventilsitz variiert wird. Dies kann nützlich sein, wenn ein Heizkörper unterdimensioniert ist.

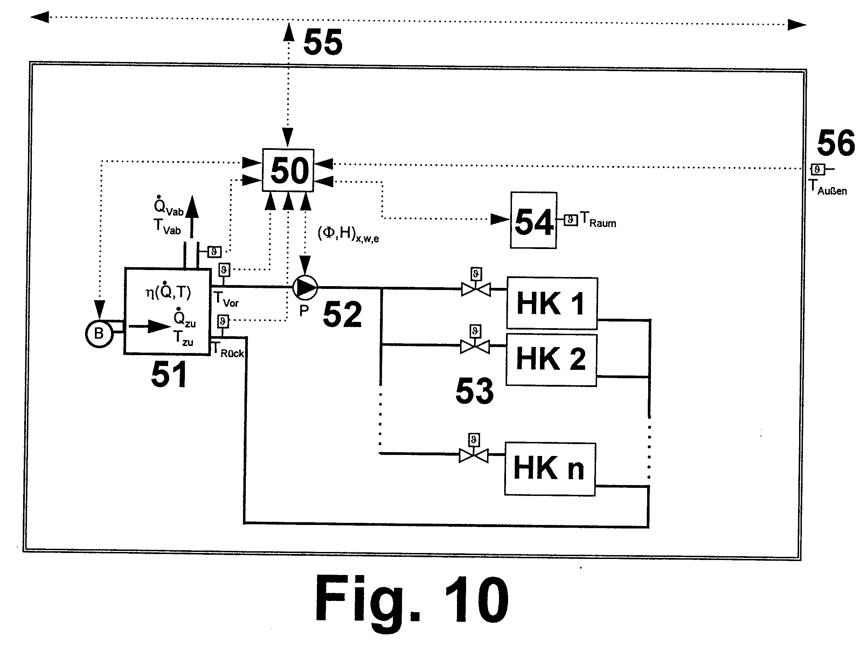

Durch die Schnittstelle zwischen Pumpe und Regelung kann das System auch zu Fernwartungszwecken eingesetzt werden, da alle Daten aus der Hydraulik und aus dem Gerät zur Verfügung stehen. In Fig. 10 ist anhand einer Einzonenanlage mit Heizkörpern HK1..n und Thermostatventilen [53] dargestellt, welche Komponenten zum voll ausgebauten System dazugehören. Der Zentralregler [50] ist zunächst mit dem Brenner [B] des Heizkessels [51], mit der Pumpe [52] und mit dem Vorlauftemperaturfühler verbunden. Optional können ein witterungskorrigierte Außentemperaturfühler [56], eine Fernbedienung- und Anzeige mit Raumtemperaturfühler [54], ein Rücklauftemperaturfühler zur Wärmemengenerfassung, ein Abgastemperaturfühler zur Wirkungsgradüberwachung und eine Kommunikationsschnittstelle [55] zur Fernüberwachung angeschlossen sein.

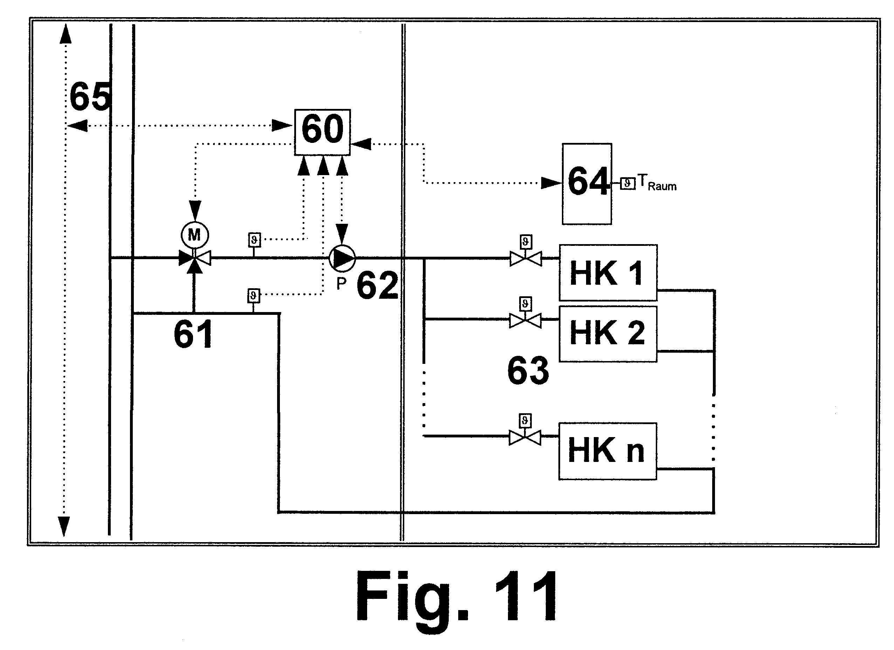

Fig. 11 beschreibt, wie das System in größeren Wohngebäuden mit vielen separaten Wohnungen eingesetzt werden kann. In jeder Wohnung mit Heizkörpern HK1..n und Thermostatventilen [63] kann ein individuelles Nachtabsenkungsprogramm eingestellt werden. Die Wohnungs-Vorlauftemperatur wird hydraulisch optimiert. Raumtemperaturfühler, Fernbedienung und Anzeige [64] sind optional ebenso wie der Witterungsfühler an der Zentrale. Mittels Pumpe [62] wird über Volumenstrom und Differenztemperatur die Wärmemenge erfaßt und summiert. Der Wohnungsnutzer kann sich vom Verlauf seiner Energiekosten überzeugen, niemand braucht zur Ablesung die Wohnung zu betreten, den alle Regler sind im Versorgungsschacht [65] über einen Bus verbunden. Dieser leitet auch das Dreipunkt-Stellsignal des Mischermotors [61] weiter, sodaß die Kesselvorlauftemperatur auf den Wert begrenzt wird, bei der der Mischer mit der höchsten Wärmeanforderung gerade voll geöffnet ist. Dieser Zustand kann auf der Anzeige der entsprachenden Wohnung sichtbar gemacht werden und bei der Abrechnung mit einem Faktor beaufschlagt werden.

## Patentansprüche

1. Verfahren zur hydraulisch optimierten Regelung der Vorlauftemperatur $[T_{Vx}]$ eines Heiz- oder Kühlmittelkreislaufes, bei dem die Vorlauftemperatur $[T_{Vx}]$ einer Wärme- oder Kältequelle [3] als innere Regelgröße gemessen wird, mit einer vorgegebenen, variierbaren inneren Führungsgröße $[T_{Vw}]$ im Verrechnungspunkt [2] verglichen wird und entsprechend der inneren Regelabweichung $[T_{Ve}]$ die Leistung der Wärme- oder Kältequelle [3] im Sinne einer Minimierung der inneren Regelabweichung $T_{Ve}$ angepaßt wird, dadurch gekennzeichnet, daß an einer Stelle des Heiz- oder Kühlmittelkreislaufs als äußere Regelgröße dessen hydraulischer Zustand $[(\Phi,H)_x]$ gemessen wird, mit einer äußeren, hydraulischen Führungsgröße $[(\Phi,H)_w]$ im Verrechnungspunkt [4] verglichen wird und entsprechend dieser äußeren Regelabweichung $[(\Phi,H)_e]$ die Führungsgröße $[T_{Vw}]$ des inneren Regelkreises im Sinne einer Minimierung der äußeren Regelabweichung $[(\Phi,H)_e]$ angepaßt wird.

2. Verfahren nach Anspruch 1., dadurch gekennzeichnet, daß der hydraulische Zustand $[(\Phi,H)_x]$ des Heiz- oder Kühlmittelkreislaufs als Fördermenge $\Phi$ und/oder Förderhöhe H des Heiz- oder Kühlmittels ermittelt wird.

3. Verfahren nach Anspruch 1., dadurch gekennzeichnet, daß der hydraulische Zustand $[(\Phi,H)_x]$ des Heiz- oder Kühlmittelkreislaufs als Drehmoment und/oder Drehzahl der Heiz- oder Kühlmittelpumpe, als magnetische Feldstärke und/oder Flußdichte innerhalb des Pumpenmotors oder als Leistungsaufnahme, Eingangsimpedanz, Induktionsspannung und/oder Phasenverschiebung an den Netzklemmen des Pumpenmotors ermittelt wird.

4. Verfahren nach einem der vorhergehenden Ansprüche, dadurch gekennzeichnet, daß aufgrund der äußeren Regelabweichung $[(\Phi,H)_e]$ mit einer direkten Vorlauftemperaturkorrektureinrichtung [7] durch den Korrekturwert $[\gamma]$ gemeinsam mit einer (witterungskorrigierten) Außentemperatursteuerung [9] auf der Grundlage ihrer speziellen Einstellung auf die Führungsgröße $[T_{Vw}]$ des inneren Regelkreises im Sinne einer Minimierung der äußeren Regelabweichung eingewirkt wird.

5. Verfahren nach Anspruch 4., dadurch gekennzeichnet, daß mit einer indirekten Vorlauftemperaturkorrektureinrichtung [8] auf der Grundlage der (witterungskorrigierten) Außentemperatur und der äußeren Regelabweichung [(Φ,H)$_e$] die Einstellungsparameter der (witterungskorrigierten) Außentemperatursteuerung [9] im Sinne einer Minimierung der äußeren Regelabweichung [(Φ,H)$_e$] beeinflußt werden.

6. Verfahren nach einem der vorhergehenden Ansprüche, dadurch gekennzeichnet, daß die hydraulische Führungsgröße ((Φ,H)$_w$] des äußeren Regelkreises durch Adaption an die individuellen Merkmale eines gegebenen Heiz- oder Kühlmittelkreislaufs bestimmt wird.

7. Verfahren nach einem der vorhergehenden Ansprüche, dadurch gekennzeichnet, daß mit Hilfe der Systemzeit oder von Systemereignissen und der äußeren Regelgröße [(Φ,H)$_x$] durch eine Teillast/Vollast-Normierung [11] auf die äußere Führungsgröße [(Φ,H)$_w$] eingewirkt wird.

8. Verfahren nach einem der vorhergehenden Ansprüche, dadurch gekennzeichnet, daß die zeitliche Änderung der äußeren Regelgröße [(Φ,H)$_x$] erfaßt wird und mit Hilfe eines Zeitgliedes [12] auf die äußere Führungsgröße [(Φ,H)$_w$] eingewirkt wird.

9. Verfahren nach einem der vorhergehenden Ansprüche, dadurch gekennzeichnet, daß über die äußere Führungsgröße [(Φ,H)$_w$] durch einen Leistungssteller [13] auf die hydraulische Pumpenleistung [P$_h$] eingewirkt wird.

10. Vorrichtung zur Regelung der Vorlauftemperatur [T$_{Vx}$] mit einer Wärme- oder Kältequelle [3], einer Pumpe, einem Heiz- oder Kühlmittelkreislauf und einer inneren Regeleinrichtung [T$_{Vx}$,T$_{Vw}$,T$_{Ve}$] zum Einstellen der Vorlauftemperatur [T$_{Vx}$], gekennzeichnet durch eine Einrichtung zum Messen des hydraulischen Zustands des Heiz- oder Kühlmittelkreislaufs und eine äußere Regeleinrichtung [(Φ,H)$_x$,(Φ,H)$_w$,(Φ,H)$_e$], die entsprechend der Regelabweichung [(Φ,H)$_e$] die Führungsgröße [T$_{Vw}$] der inneren Regeleinrichtung beeinflußt.

11. Vorrichtung nach Anspruch 10., dadurch gekennzeichnet, daß die Einrichtung zum Messen des hydraulischen Zustands in der Pumpe angeordnet ist.

12. Vorrichtung nach Anspruch 10. oder 11., dadurch gekennzeichnet, daß in der Pumpe eine Leistungsstelleinrichtung [13], ein Zeitglied [12] und/oder eine Teillast/Vollast-Normierung [11] angeordnet ist.

Fig. 1

Fig. 2

Fig. 3

Fig. 4

EP 0 730 213 A2

$H$

$(\Phi_0, H_0)$
Ventile
geschlossen

$R_h$ = konst

$R_h$ = konst

H = konst.

$\Phi$ = konst.

$(\Phi_1, H_1)$
Ventile
offen

$n_{min}$

n = konst.

$n_{max}$

$\Phi$

# Fig. 5

EP 0 730 213 A2

a)

b)

c)

d)

# Fig. 6

Fig. 7

**Fig. 8**

EP 0 730 213 A2

**41** **41** **41**

HK 1 HK 2 HK n

$\Delta p_{max}$ $\Delta p_{max}$ $\Delta p_{max}$

**42** **42** **42**

**a)**

# Fig. 9

**41** **41** **41**

HK 1 HK 2 HK n

$\vartheta_{Rmax}$

**42** $\Delta p_{max}$ **42** $\Delta p_{max}$ **42** $\Delta p_{max}$ **43**

**b)**

# Fig. 10

EP 0 730 213 A2

# Fig. 11

EP 0 730 213 A2

Fig. 12

EP 0 730 213 A2